# EUROPÄISCHE PATENTSCHRIFT

(11) **EP 2 675 766 B1**
(45) Veröffentlichungstag und Bekanntmachung des Hinweises auf die Patenterteilung: **16.06.2021**
(21) Anmeldenummer: 12705792.5
(22) Anmeldetag: 17.02.2012
(51) Int. Cl.: C03C 29/00, C03C 3/19, C03C 4/20, C03C 8/24, H01R 13/03, H01R 4/02, H01M 10/0525, B23K 101/36, B23K 103/10, H01M 50/172, H01M 50/186, H01M 50/191, H01M 50/543

(54) **Durchführung**
Feed-through
Pièce formant passage

(30) Priorität: 18.02.2011 DE 102011011705; 25.02.2011 DE 102011012430; 01.04.2011 DE 102011015869; 10.06.2011 DE 102011103975; 10.06.2011 DE 102011103976; 07.07.2011 DE 102011106873
(43) Veröffentlichungstag der Anmeldung: 25.12.2013
(73) Patentinhaber: Schott AG, 55122 Mainz (DE)
(72) Erfinder: KROLL, Frank, 84036 Landshut (DE); HARTL, Helmut, A-1210 Wien (AT); ROTERS, Andreas, 55118 Mainz (DE); ESEMANN, Hauke, 55286 Woerrstadt (DE); GOEDEKE, Dieter, 65812 Bad Soden (DE); DAHLMANN, Ulf, 55239 Gau-Odernheim (DE); PICHLER-WILHELM, Sabine, 84028 Landshut (DE); LANDENDINGER, Martin, 84061 Ergoldsbach (DE); BACKNAES, Linda Johanna, 84036 Landshut (DE)
(74) Vertreter: Sawodny, Michael-Wolfgang
(86) Internationale Anmeldenummer: PCT/EP2012/000702
(87) Internationale Veröffentlichungsnummer: WO 2012/110246

(56) Entgegenhaltungen:
- EP-A2- 0 954 045
- US-A- 5 262 364
- US-A1- 2003 134 194
- DATABASE WPI Week 198431 7. Dezember 1983 (1983-12-07) Thomson Scientific, London, GB; AN 1984-194386 XP002677543, -& SU 1 058 909 A1 (KOSTANYAN K A) 7. Dezember 1983 (1983-12-07)
- DATABASE WPI Week 200919 Thomson Scientific, London, GB; AN 2009-F79803 -& JP 2009 054966 A (KYOCERA CORP) 12 March 2009 (2009-03-12)
- DATABASE WPI Week 199015 Thomson Scientific, London, GB; AN 1990-110623 -& JP H02 60051 A (FURUKAWA BATTERY CO LTD) 28 February 1990 (1990-02-28)
- DATABASE WPI Week 198719 Thomson Scientific, London, GB; AN 1987-132763 -& JP S62 73555 A (EAGLE KOGYO) 4 April 1987 (1987-04-04)
- DATABASE WPI Week 198108 15 December 1980 (1980-12-15) Thomson Scientific, London, GB; AN 1981-12673D -& JP S55 161366 A (DAINI SEIKOSHA KK) 15 December 1980 (1980-12-15)

## Beschreibung

Die Erfindung betrifft eine Durchführung zum Durchführen eines Leiters eines Durchführungsbauteils durch ein Gehäuseteil eines Gehäuses, insbesondere eines Batteriegehäuses. Das Durchführungsbauteil umfasst im Wesentlichen einen stiftförmigen Leiter und ein Kopfteil.
Akkumulatoren, bevorzugt für Lithium-Ionen-Batterien, sind für verschiedene Anwendungen vorgesehen, wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydridbatterien ersetzen. Als Batterien im Sinne der Erfindung wird sowohl eine Einwegbatterie, die nach ihrer Entladung entsorgt und/oder recycelt wird, als auch ein Akkumulator verstanden
Lithium-Ionen-Batterien sind seit vielen Jahren bekannt. Diesbezüglich wird beispielsweise auf "Handbook of Batteries, David Linden, Herausgeber, 2. Auflage, McGrawhill, 1995, Kapitel 36 und 39" verwiesen.
Verschiedene Aspekte von Lithium-Ionen-Batterien sind in einer Vielzahl von Patenten beschrieben. Beispielsweise seien genannt US 961,672, US 5,952,126, US 5,900,183, US 5,874,185, US 5,849,434, US 5,853,914 sowie US 5,773,959.

Lithium-Ionen-Batterien, insbesondere für Anwendungen in einer Automobil-Umgebung weisen in der Regel eine Vielzahl von einzelnen Batteriezellen auf, die miteinander in Serie geschaltet werden. Die miteinander in Reihe beziehungsweise Serie geschalteten Batteriezellen werden zu sogenannten Batteriepacks zusammengefasst, mehrere Batteriepacks dann zu einem Batteriemodul, das auch als Lithium-Ionen-Batterie bezeichnet wird. Jede einzelne Batteriezelle besitzt Elektroden, die aus einem Gehäuse der Batteriezelle herausgeführt werden.

Insbesondere für die Anwendung von Batterien, bevorzugt Lithium-Ionen-Batterien in der Automobil-Umgebung müssen eine Vielzahl von Problemen wie Korrosionsbeständigkeit, Beständigkeit bei Unfall oder Schwingungsfestigkeit gelöst werden. Ein weiteres Problem ist die hermetische Dichtheit der Batteriezelle, über einen langen Zeitraum. Die Dichtheit beeinträchtigen können z. B. Undichtigkeit im Bereich der Elektroden der Batteriezelle beziehungsweise der Elektrodendurchführung der Batteriezelle. Derartige Undichtigkeiten können beispielsweise hervorgerufen werden durch Temperaturwechselbelastungen und mechanische Wechselbelastungen, wie beispielsweise Vibrationen im Fahrzeug oder die Alterung des Kunststoffes. Ein Kurzschluss oder Temperaturänderungen, der Batterie oder Batteriezelle kann zu einer verminderten Lebensdauer der Batterie beziehungsweise Batteriezelle führen.

Um eine bessere Beständigkeit bei Unfall sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird. Der Stromanschluss beziehungsweise die Elektroden sind durch einen Kunststoff isoliert. Nachteilig an den Kunststoffisolierungen sind die limitierte Temperaturbeständigkeit, die begrenzte mechanische Beständigkeit, die Alterung und die unsichere Dichtheit über die Lebensdauer. Die Stromdurchführungen sind bei den Lithium-Ionen-Batterien gemäß dem Stand der Technik somit nicht hermetisch dicht in beispielsweise das Deckelteil der Li-Ionen-Batterie eingebaut. Des Weiteren sind die Elektroden verquetschte und lasergeschweißte Verbindungsbauteile mit zusätzlichen Isolatoren im Innenraum der Batterie beziehungsweise Batteriezelle.

Ein weiteres Problem bei den Lithium-Ionen-Batterien im Stand der Technik war, dass die Batteriezellen einen großen Bauraum aufwiesen und aufgrund der hohen Ströme durch Widerstandsverluste sehr rasch Erwärmung und damit Temperaturänderungen auftraten.

Aus der DE 27 33 948 A1 ist eine Alkalibatterie bekanntgeworden, bei der ein Isolator wie z. B. Glas oder Keramik unmittelbar durch eine Schmelzverbindung mit einem Metallteil verbunden ist.

Eines der Metallteile ist elektrisch mit einer Anode der Alkalibatterie und das andere elektrisch mit einer Kathode der Alkalibatterie verbunden. Bei den in der DE 27 33 948 A1 verwandten Metallen handelt es sich um Eisen oder Stahl. Leichtmetalle wie Aluminium sind in der DE 27 33 948 A1 nicht beschrieben. Auch die Verschmelztemperatur des Glas- oder Keramikmaterials ist in der DE 27 33 948 A1 nicht angegeben. Bei der in der DE 27 33 948 A1 beschriebenen Alkalibatterie handelt es sich um eine Batterie mit einem alkalischen Elektrolyten, der gemäß der DE 27 33 948 A1 Natriumhydroxid oder Kaliumhydroxid enthält. Eine Erwähnung von Li-Ionen-Batterien findet sich in der DE 27 33 948 A1 nicht.

Aus der DE 698 04 378 T2 bzw. der EP 0 885 874 B1 ist ein Verfahren zur Herstellung von asymmetrischen organischen Carbonsäureestern und zur Herstellung von wasserfreien organischen Elektrolyten für Alkali-Ionen-Batterien bekanntgeworden. Auch Elektrolyte für wiederaufladbare Lithium-Ionenzellen sind in der DE 698 04 378 T2 bzw. EP 0 885 874 B1 beschrieben.

Die DE 699 23 805 T2 bzw. EP 0 954 045 B1 beschriebt eine RF-Durchführung mit verbesserter elektrischer Wirksamkeit. Bei den aus der EP 0 954 045 B1 bekannten Durchführungen handelt es sich nicht um eine Glas-Metall-Durchführung. In der EP 0 954 045 B1 werden Glas-Metall-Durchführungen, die unmittelbar innerhalb beispielsweise der Metallwand einer Verpackung ausgebildet werden als nachteilig beschrieben, da derartige RF-Durchführungen auf Grund der Versprödung des Glases nicht dauerhaft sind.

Die DE 690 230 71 T2 bzw. EP 0 412 655 B1 beschreibt eine Glas-Metall-Durchführung für Batterien oder andere elektrochemische Zellen, wobei als Gläser Gläser mit einem SiO₂-Gehalt von ungefähr 45 Gew.-% verwandt werden und als Metalle, insbesondere Legierungen verwandt werden, die Molybdän und/oder Chrom und/oder Nickel umfassen. Die Verwendung von Leichtmetallen ist in der DE 690 23 071 T2 ebenso wenig beschrieben wie Verschmelztemperaturen bzw. Verschmelzungstemperaturen für die verwandten Gläser. Auch die Materialien für die stiftförmigen Leiter sind gemäß DE 690230 71 T2 bzw. EP 0 412 655 B1 Legierungen, die Molybdän, Niob oder Tantal umfassen.

Aus der US 7,687,200 ist eine Glas-Metall-Durchführung für Lithium-Ionen-Batterien bekannt geworden. Gemäß der US 7,687,200 war das Gehäuse aus Edelstahl und der stiftförmige Leiter aus Platin/Iridium. Als Glasmaterialien sind in der US 7,687,200 die Gläser TA23 und CABAL-12 angegeben. Gemäß der US 5,015,530 handelt es sich dabei um CaO-MgO-Al₂O₃-B₂O₃-Systeme mit Verschmelztemperaturen von 1025° C bzw. 800° C. Des Weiteren sind aus der US 5,015,530 Glaszusammensetzungen für Glas-Metall-Durchführungen für Lithium-Batterien bekannt geworden, die CaO, Al₂O₃, B₂O₃, SrO und BaO umfassen, deren Verschmelztemperaturen im Bereich 650° C - 750° C liegen und damit zu hoch sind für eine Verwendung zusammen mit Leichtmetallen. Darüber hinaus ist Barium in vielen Anwendungen unerwünscht, da es als umweltschädlich und gesundheitsgefährdend erachtet wird. Ebenso in der Diskussion ist Strontium, auf dessen Einsatz zukünftig ebenfalls verzichtet werden sollte.

Des Weiteren weisen die Glaszusammensetzungen gemäß der US 7,687,200 einen Ausdehnungskoeffizient α im Temperaturbereich von 20° C bis 350° C von lediglich a ≈ 9 · 10⁻⁶/K auf.

US 2003/134194 A1 beschreibt eine Durchführung mit einem ALSG32 Glas für eine Lithium-Ionen-Batterie.

US 5,262,464 A beschreibt eine Glaszusammensetzung, die ein hochausdehnendes metallisches Material wie Alluminium, Edelstahl, Kupfer und Kupferlegierungen hermetisch abdichtet.
SU1058909 A zeigt ein niedrig schmelzendes Phosphatglas.
JP2009054996 A zeigt zwei in einen keramischen Grundkörper eingebrachte Leiter.
JPH0260051 A beschreibt eine Durchführung für eine Batterie mit einem elektrischen Leiter, wobei der elektrische Leiter von einem Isolator umgeben wird.
JPS6273555 A beschreibt eine Dichtung für eine Flüssigkeitsbatterie und
JPH0260051 A eine hermetische dichte Speichereinrichtung.

JPS55161366 A lehrt eine Durchführung für eine Batterie mit einem Leiter mit erweitertem Kopfteil, der eingeglast ist. Das Kopfteil, umfassend "Kovar" (Fe-Ni-Co-Legierung), ist mit einem Verbindungsteil verbindbar.

Aufgabe der Erfindung ist es somit, eine Durchführung anzugeben, die die Probleme des Standes der Technik vermeidet.
Erfindungsgemäß wird diese Aufgabe durch eine Durchführung gemäß Anspruch 1 gelöst.
Die Durchführung umfasst ein Glas- oder Glaskeramikmaterial mit einem im Wesentlichen stiftförmigen Leiter und einem Kopfteil, wobei die Abmessungen des Kopfteils größer als die des im Wesentlichen stiftförmigen Leiters sind. Bei einem Leiter mit im Wesentlichen rundem Querschnitt sind dann die Abmessungen des Kopfteils größer als der Durchmesser des stiftförmigen Leiters. Dies bedeutet, dass die Kopffläche des Kopfteiles größer ist als die Kopffläche des stiftförmigen Leiters mit dem das Kopfteil verbunden ist. Des Weiteren ist das Kopfteil derart ausgestaltet, dass das Kopfteil mit einem Elektroden-Verbindungsteil verbindbar ist. Bei dem Elektroden-Verbindungsteil handelt es sich insbesondere um ein Bauteil, das aus Kupfer für die Kathode oder Aluminium für die Anode besteht. Die Verbindung von Kopfteil und Elektroden-Verbindungsbauteil erfolgt mit einer mechanisch stabilen, insbesondere nicht lösbaren elektrischen Verbindung. Erfindungsgemäß umfasst der Leiter eine Aluminiumlegierung, Aluminium, eine Kupferlegierung, Kupfer, eine Silberlegierung, Silber, eine Goldlegierung, Gold, Magnesium oder eine Magnesiumlegierung. Eine mechanisch stabile nicht lösbare elektrische Verbindung wird dadurch zur Verfügung gestellt, dass das Kopfteil und das Elektroden- Verbindungsteil durch Schweißen, insbesondere Laserschweißen, Widerstandsschweißen, Elektronenstrahlschweißen, Reibschweißen, Ultraschallschweißen, Bonden, Kleben, Löten, Verstemmen, Schrumpfen, Verpressen, Verklemmen und Quetschen bevorzugt stoffschlüssig verbunden wird. Die Verbindung von Kopfteil und Elektrodenverbindungsbauteil zu dem Durchführungsbauteil erfolgt, bevorzugt nachdem das Durchführungsbauteil umfassend das Kopfteil und den stiftförmigen Leiter in das Gehäuse der Batteriezelle eingesetzt oder eingeglast ist. Selbstverständlich wäre es auch möglich, das Durchführungsbauteil vor dem Einsetzen in die Gehäuseöffnung beziehungsweise Einglasen mit dem Elektrodenverbindungsbauteil zu verbinden, allerdings ist die erstgenannte Möglichkeit die bevorzugte.

Durch die erfindungsgemäße Durchführung wird eine Durchführung zur Verfügung gestellt, die bei Verwendung in einem Gehäuse für Batteriezellen nur einen geringen Innenbauraum benötigt. Das Kopfteil des Durchführungsbauteiles weist eine sehr große Auflagefläche zum Anschluss des Elektrodenverbindungsbauteiles auf. Hierdurch wird eine hohe Stabilität im Anschlussbereich erreicht. Insbesondere wird gegenüber einer Anbindung der Elektrodenverbindungsbauteile direkt an den Stiften eine wesentlich höhere Biegesteifigkeit erreicht. Ein weiterer Vorteil bei einer Anbindung der Elektrodenverbindungsbauteile über das Kopfteil ist darin zu sehen, dass gegenüber einer direkten Anbindung an den Stift Verengungen beziehungsweise starke Veränderungen der Querschnittsfläche in der Leiterbahn von der Batteriezelle zur Durchführung durch das Gehäuse der Batteriezelle vermieden werden. Querschnittsverengungen führen insbesondere bei hohen Strömen von 20A bis zu 500A, wie sie bei Lithium-Ionen-Akkumulatoren als Energieträger in Automobilen auftreten, zu hoher Verlustwärme, die in den Batteriezellen zu Problemen führen können. Derartige Verlustwärmen können mit dem erfindungsgemäßen Kopfteil des Durchführungsbauteiles vermieden werden. Des Weiteren ist es möglich, das Durchführungsbauteil separat vom Elektroden-Verbindungsbauteil herzustellen, was eine optimierte separate Fertigung von Elektroden-Verbindungsbauteil und Durchführungsbauteil ermöglicht. Das separat hergestellte Elektroden-Verbindungsteil sowie das separat hergestellte Durchführungsbauteil werden erst anschließend an die jeweilige Fertigung miteinander verbunden, bevorzugt nachdem das Durchführungsbauteil in die Öffnung im Gehäuseteil eingesetzt oder eingeglast wurde. Weitere Vorteile der separaten Fertigung der Elektrodenverbindungsbauteile sowie der Durchführungsbauteile und der daran anschließenden Verbindung liegen auch darin, dass die Materialauswahl spezifisch für die unterschiedlichen Bauteile getroffen werden kann, insbesondere auch mit Blick auf die jeweilige Herstelltechnologie.

Bei der erfindungsgemäßen Technologie werden zudem zusätzliche Isolatoren im Innenraum der Batterien, wie sie bei den derzeit verwandten ElektrodenVerbindungsbauteilen üblich sind, vermieden.

In einer bevorzugten Weiterbildung der Erfindung ist vorgesehen, dass das Kopfteil als Zentrierteil, insbesondere in Form eines über das Kopfteil hinausragenden Fortsatzes des im Wesentlichen stiftförmigen Leiters ausgebildet ist. Der über das Kopfteil des Durchführungsbauteils hinausragende Fortsatz beziehungsweise Zapfen dient im Wesentlichen dazu, ein Elektroden-Verbindungsteil zu zentrieren und/oder ein Verdrehen des Elektroden-Verbindungsteils, das mit dem Kopfteil verbunden wird, zu verhindern. Des Weiteren ist das Durchführungsbauteil mit Kopfteil derart ausgebildet, dass der Leiterquerschnitt über den gesamten Strompfad von der Durchführung bis zu den Elektroden-Anschlüssen des Elektrodenverbindungsbauteils im wesentlichen gleich bleibt. Hierdurch wird sichergestellt, dass keine Verlustwärme über den gesamten Leitungspfad auftritt, wie dies bei Leiterverengungen der Fall wäre. Bei dem Elektrodenverbindungsbauteil, das mit dem Durchführungsbauteil verbunden wird, handelt es sich bevorzugt ebenfalls um ein flaches Bauteil, bei dem die Dicke klein gegen die Abmessungen des Bauteils im Wesentlichen senkrecht zur Dicke ist. Beispielsweise beträgt die Dicke des Bauteils 0,5 mm bis 5 mm. Die Abmessungen des Bauteiles senkrecht zur Dicke, beispielsweise bei einem flachen, im Wesentlichen kreisförmigen Bauteil betragen dann 5 mm bis 30 mm.

Um auch Elektroden-Verbindungsteile, die nicht aus einem einzigen Material bestehen, z. B. Kupfer für die Kathode oder Aluminium für die Anode verwenden zu können, kann vorgesehen sein, Elektroden-Verbindungsbauteile aus anderen Materialien zur Verfügung zu stellen und anschließend einer Oberflächenbehandlung zu unterziehen. Beispielsweise kann in einer Oberflächenbehandlung die Oberfläche des Elektroden-Verbindungsbauteils beschichtet werden. So kann beispielsweise ein Elektroden-Verbindungsbauteil mit Cu, Al, Ni, Au, Pd, Zn, Ag, Au beschichtet werden. Auch andere Materialien sind möglich, insbesondere auch Legierungen wie z. B. Aluminiumlegierungen, Kupferlegierungen, Silberlegierungen oder Goldlegierungen.

Eine sichere Verbindung des Elektroden-Bauteiles mit dem Durchführungsbauteil wird durch Schweißen, Löten, Verpressen, Verstemmen, Krempen, Schrumpfen, Klemmen oder Quetschen erreicht. Besonders bevorzugt ist es, die Verbindung mit Hilfe von Schweißen, insbesondere Laserschweißen, Widerstandsschweißen, Ultraschallschweißen, Reibschweißen oder Elektronenstrahlschweißen herzustellen.

Als Material für den stiftförmigen Leiter wird erfindungsgemäß Kupfer, eine Kupferlegierung, Aluminium oder eine Aluminiumlegierung eingesetzt. Es können aber auch andere Materialien wie , eine Kupferseele, Aluminiumlegierungen, Magnesium oder Magnesiumlegierungen sowie Silber,
eine Silberlegierung, Gold oder eine Goldlegierung für den stiftförmigen Leiter eingesetzt werden.

Um ein Verbiegen des Elektroden-Verbindungsbauteils bei Einbau in das Gehäuse und dadurch einen Kurzschluss zu verhindern, kann vorgesehen sein, dass das Elektrodenverbindungsbauteil mit einem Versteifungsprofil versehen ist. Die Abmessungen, d. h. die Fläche des Kopfteils sind in einer ersten Ausgestaltung der Erfindung so gewählt, dass sie wenigstens eine Durchgangsöffnung, beispielsweise die eines Gehäuseteils eines Batteriegehäuses mit eingebrachtem Glas- oder Glaskeramikmaterials abdecken. Optional kann auch eine über das Glas- oder Glaskeramikmaterial herausragende bzw. überstehende Kopfform vorgesehen sein, um mehr Verbindungsmöglichkeiten zu den Elektrodenverbindungsbauteilen zur Verfügung zu stellen. Die Verbindung der Elektrodenverbindungsbauteile mit der Kopfform erfolgt durch Schweißen, insbesondere Laserschweißen, Widerstandsschweißen, Elektronenstrahlschweißen, Ultraschallschweißen, Reibschweißen, Bonden, Kleben, Löten, Verstemmen, Krimpen, Schrumpfen, Verpressen, Verklemmen oder Quetschen.

Neben dem Durchführungsbauteil wird als Vergleichsbeispiel auch ein Verfahren zur Herstellung eines derartigen Durchführungsbauteils angegeben, wobei zunächst das Durchführungsbauteil umfassend den im Wesentlichen stiftförmigen Leiter und das Kopfbauteil zur Verfügung gestellt wird. In einem hiervon unabhängigen Herstellungsprozess wird ein Elektrodenverbindungsbauteil zur Verfügung gestellt und nach getrennter Herstellung von Durchführungsbauteil und Elektroden-Verbindungsbauteil, wird das Elektroden-Verbindungsbauteil mit dem Durchführungsbauteil, insbesondere im Bereich des Kopfbauteils mechanisch stabil, nicht lösbar und elektrisch gut leitend verbunden. Eine derartige Verbindung kann beispielsweise durch Schweißen, insbesondere Laserschweißen, Widerstandsschweißen, Elektronenstrahlschweißen oder Löten aber auch Verstemmen, Krempen, Schrumpfen, Verpressen, Verklemmen und Verquetschen hergestellt werden.

Gut leitend ist beispielsweise, wenn die Leitfähigkeit des Gesamtbauteils aus stiftförmigem Leiter mit Kopfbauteil und mit diesem verbundenen Elektrodenverbindungsbauteil größer als 10 · 10⁶ S/m, insbesondere größer als 15 · 10⁶ S/m, ganz bevorzugt größer als 25 · 10⁶ S/m ist bzw. bevorzugt im Bereich 10 · 10⁶ S/m bis 50 · 10⁶ S/m liegt.

Um eine möglichst optimale Verbindung von Durchführungsbauteil und Elektroden-Verbindungsbauteil herzustellen, können spezifische, für eine derartige Verbindung notwendige Oberflächenbehandlungen vorgenommen werden, beispielsweise das Beschichten mit einem Metall. Beispielsweise kann eine Beschichtung mit Cu, Al vorgenommen werden, falls das Material des Elektroden-Verbindungsbauteils nicht Kupfer oder Aluminium ist. Das Leitermaterial bzw. das Stiftmaterial des Durchführungsbauteils bzw. das Material des gesamten Durchführungsbauteils kann bevorzugt ebenfalls Kupfer, Aluminium, aber auch oder eine Kupferseele, d. h. ein NiFe-Mantel mit Kupferinnenteil oder CF25, d. h. eine Kobalt-Eisenlegierung, Silber, eine silberlegierung, Gold oder eine Goldlegierung sein.

Besonders bevorzugt ist es, dass das Material des Durchführungsbauteils sowie des Elektroden-Verbindungsbauteils ein und dasselbe Material, beispielsweise Kupfer oder Aluminium umfassen. Hierbei wird für die Kathode Kupfer eingesetzt, für die Anode Aluminium. Auch Aluminium- oder Kupferlegierungen sind denkbar.

Als Aluminium bzw. Aluminiumlegierung für den Leiter finden bevorzugt Verwendung:
EN AW-1050 A
EN AW-1350
EN AW-2014
EN AW-3003
EN AW-4032
EN AW-5019
EN AW-5056
EN AW-5083
EN AW-5556A
EN AW-6060
EN AW-6061.

Als Kupfer bzw. Kupferlegierungen für den Leiter finden bevorzugt Verwendung:
Cu-PHC 2.0070
Cu-OF 2.0070
Cu-ETP 2.0065
Cu-HCP 2.0070
Cu-DHP 2.0090

Eine möglichst reproduzierbare Verbindung des Elektrodenverbindungsbauteils mit dem Durchführungsbauteil wird beispielsweise dadurch erreicht, dass das Elektrodenverbindungsbauteil mit einer Zentriermöglichkeit, beispielsweise einer Zentrieröffnung oder einer Drehsicherung versehen wird und das Kopfteil des Durchführungsbauteils mit einem Fortsatz beziehungsweise Zapfen, der beispielsweise in eine Zentrieröffnung des Elektroden-Verbindungsbauteils eingreift.

In einer besonders vorteilhaften Ausführungsform der Erfindung kann vorgesehen sein, dass die Einglasung des Durchführungsbauteils in ein Glas- und/oder Glaskeramikmaterial in einem Grundkörper erfolgt, der anschließend in eine Öffnung des Gehäusebauteils eingesetzt wird und nach Einsetzen des Durchführungsbauteils mit dem Elektroden-Verbindungsbauteil verbunden wird. Bevorzugt ist der Grundkörper ringförmig mit einer kreisrunden oder aber auch ovalen Öffnung je nach Form des vom Grundkörpers aufgenommenen Stiftes. Besonders bevorzugt ist der Grundkörper aus einem Leichtmetall, beispielsweise Aluminium, einer Aluminiumlegierung, Magnesium oder einer Magnesiumlegierung, Titan oder einer Titanlegierung. Der Grundkörper kann aber auch Edelstahl, Stahl, nicht rostenden Stahl oder Werkzeugstahl umfassen.

Alternativ kann das Durchführungsbauteil auch direkt in eine Öffnung des Gehäuseteils, insbesondere eines Gehäuseteils eines Batteriegehäuses eingeglast werden und anschließend mit dem Elektroden-Verbindungsteil verbunden werden. Die Ausführungsform mit einer Einglasung in einem Grundkörper anstelle einer Direktglasung in das Gehäuseteil z. B. das Deckelteil hat mehrere Vorteile. Bei der Ausgestaltung der Durchführung durch das Gehäuseteil mittels eines zusätzlichen Grundkörpers, in dem das stiftförmige Leitermaterial eingeglast wird, ist es möglich, die Durchführung vorzufertigen, d.h. das Stiftmaterial in den Grundkörper einzuglasen und anschließend in das Gehäuseteil, insbesondere eine Batteriezelle, einzubauen. Der Grundkörper kann dann auf die jeweilige Herstelltechnologie und Form der Durchführung sowie der Herstelltechnologie und Form des Gehäuseteils optimiert getroffen werden. Insbesondere können durch die Vorfertigung wesentlich kleinere Heizeinrichtungen als bei einer Einglasung direkt in das Gehäuseteil verwendet werden, da nicht das gesamte Gehäuseteil, z. B. in einem Ofen erwärmt werden muss, sondern lediglich der Grundkörper mit wesentlich geringeren Abmessungen. Des Weiteren ermöglicht eine derartige Ausgestaltung, bei der eine Vorfertigung der Durchführung aus einem Grundkörper oder einem im Wesentlichen stiftförmigen Leiter möglich ist, ein kostengünstiges Einbringen der Durchführung in die Öffnung des Gehäuseteils, beispielsweise in einem einstufigen Prozess, beispielsweise unter Ausnutzung der Kaltverfestigungsmöglichkeiten des Gehäuseteils. Konkret bedeutet dies, dass zunächst in das Gehäuseteil, beispielsweise in den Deckel die Öffnung, z. B. durch Stanzen, eingebracht wird. Das Gehäuse ist kaltverfestigt, da es nicht erhitzt wird. Im Gegensatz hierzu ist der Grundkörper weich, da er beim Einglasen des stiftförmigen Leiters mit einem Glas- oder Glaskeramikmaterial erhitzt wird. Auf diese Art und Weise ist es möglich, ein strukturfestes Batteriezellengehäuse, insbesondere im Bereich der Durchführungen herstellen zu können, da im Gegensatz beispielsweise zu einer Direkteinglasung in ein Gehäuseteil kein Verlust der Kaltverfestigung des Gehäuseteils, insbesondere Deckteils auftritt. Ein weiterer Vorteil ist, dass die Materialstärke des Gehäuseteils gegenüber dem Grundkörper, in den die Einglasung erfolgt deutlich geringer gewählt werden kann. Beispielsweise kann die Materialstärke des Gehäuseteils 1,5 mm und weniger betragen, wohingegen der Grundkörper aus Festigkeitsgründen eine Dicke von 2,0 mm, insbesondere 3 mm und mehr umfasst. Die Materialstärke des Gehäuses beziehungsweise Gehäuseteils liegt bevorzugt zwischen 1 mm und 3 mm, bevorzugt zwischen 1,5 mm und 3 mm. Die Dicke des Grundkörpers zwischen 2 mm und 6 mm, bevorzugt 2,5 mm und 5 mm. Die Dicke des Grundkörpers wird dabei immer angepasst an die Materialstärke des Gehäuses beziehungsweise Gehäuseteils, insbesondere des Batteriedeckels gewählt, in den die Durchführung eingesetzt wird. Bei einer Direkteinglasung wären hingegen unnötig große Materialstärken erforderlich. Das Material des Gehäusebauteils ist bevorzugt ein Metall, beispielsweise Edelstahl, Stahl, Normalstahl oder Werkzeugstahl, insbesondere aber ein Leichtmetall, wie beispielsweise Aluminium, AlSiC, eine Aluminiumlegierung, Magnesium oder eine Magnesiumlegierung. Sowohl für das Batteriegehäuse wie auch den Grundkörper können Titan- und/oder Titanlegierungen wie Ti6246 und/oder Ti6242 verwandt werden. Titan ist ein körperverträgliches Matrial, so dass es für medizinische Anwendungen, beispielsweise in der Prothetik, zum Einsatz kommt. Ebenso wird es wegen der besonderen Festigkeit, Beständigkeit und geringem Gewicht in besonderen Anwendungen gerne verwendet, beispielsweise im Rennsport, aber auch für Luft- und Raumfahranwendungen.
Als Normalstahl für den Grundkörper und/oder das Gehäuse können insbesondere St35, St37 oder St38 verwandt werden. Besonders bevorzugte Edelstähle sind beispielsweise X1CrMoS17, X5CrNi1810, XCrNiS189, X2CrNi1911, X12CrNi177, X5CrNiMo17-12-2, X6CrNiMoTi17-12-2, X6CrNiTi1810 und X15CrNiSi25-20, X10CrNi1808, X2CrNiMo17-12-2, X6CrNiMoTi17-12-2, insbesondere aber die Edelstähle mit der Werkstoff-Nummer (WNr.) 1.4301, 1.4302, 1.4303, 1.4304, 1.4305, 1.4306 sowie 1.4307 gemäß Euro-Norm (EN). Diese Edelstähle zeichnen sich durch ihre gute Schweißarbeit, insbesondere beim Laserschweißen oder Widerstandsschweißen aus sowie gute Tiefziehbarkeit.
Als Werkstoff können auch Automatenstähle, beispielsweise mit der Werkstoff-Nummer (WNr.) 1.0718, die über einen geeigneten Ausdehnungskoeffizienten verfügen und durch Drehen bearbeitet werden können oder Baustähle, beispielsweise mit der Werkstoff-Nummer (WNr.) 1.0338 eingesetzt, die durch Stanzen bearbeitet werden können, für das Gehäuse und/oder den Grundkörper verwandt werden.

Neben der Durchführung stellt die Erfindung auch ein Gehäuse gemäss Anspruch 14 zur Verfügung.

Neben der Durchführung wird auch eine Speichereinrichtung, insbesondere eine Batterie, bevorzugt eine Batteriezelle, insbesondere mit einem Batteriezellengehäuse, zur Verfügung gestellt, die gemäss Anspruch 18 eine Durchführung aufweist. Das Batteriezellengehäuse besteht bevorzugt aus dem gleichen Material wie der Grundkörper, insbesondere einem Leichtmetall. Bevorzugt handelt es sich bei der Batterie um eine Lithium-Ionen-Batterie. Die Lithium-Ionen-Batterie weist bevorzugt einen nicht-wässrigen Elektrolyten, insbesondere auf Carbonatbasis, bevorzugt eine Carbonatmischung, auf. Die Carbonatmischung kann ein Ethylencarbonat in Mischung mit Dimethylcarbonat mit einem Leitsalz, beispielsweise LiPF₆, umfassen.
Alternativ zu einer Einglasung direkt in einer Öffnung eines Teiles des Batteriegehäuses bzw. Batteriezellengehäuses wäre es auch möglich, das Durchführungsbauteil zunächst in einen Grundkörper einzuglasen und diesen Grundkörper dann wiederum in eine Öffnung im Gehäusebauteil einzusetzen. Der Grundkörper ist bevorzugt ein ringförmiger Grundkörper, insbesondere aus Aluminium. Das Verschmelzen des Durchführungsbauteils, insbesondere im Bereich des stiftförmigen Leiters mit einem Grundkörper, hat den Vorteil, dass zunächst die Einglasung des stiftförmigen Leiters mit dem Grundkörper vorgenommen werden kann und anschließend kostengünstig das Durchführungsbauteil mit dem Grundkörper in die Öffnung des Gehäuseteils eingebracht wird, beispielsweise in einem einstufigen Prozess, beispielsweise unter Ausnutzung der Kaltverfestigungsmöglichkeiten des Gehäuseteils. Konkret bedeutet dieses Verfahren, dass zunächst in das Gehäuseteil, beispielsweise in den Deckel die Öffnung, z. B. durch Stanzen, eingebracht wird. Das Gehäuse ist kaltverfestigt, da es nicht erhitzt wird. Im Gegensatz hierzu ist der Grundkörper weich, da er beim Einglasen des stiftförmigen Leiters mit einem Glas- oder Glaskeramikmaterial erhitzt wird. Auf diese Art und Weise ist es möglich, ein strukturfestes Batteriegehäuse, beziehungsweise Batteriezellengehäuses insbesondere im Bereich der Durchführungen herstellen zu können. Ein weiterer Vorteil ist, dass die Materialien für Grundkörper und Gehäuseteil beziehungsweise Gehäusebauteil unterschiedlich gewählt werden können, insbesondere im Bezug auf die Materialqualität und die Wahl der Legierung. Die Durchführung kann mit dem Grundkörper im Gehäuseteil hermetisch dicht durch Schweißen, Löten, Einpressen, Einbördeln oder Einschrumpfen verbunden werden. Beim Verbinden der Durchführung mit dem Gehäusebauteil, z. B. durch Schweißen wird darauf geachtet, dass der Temperatureintrag so niedrig wie möglich ist, um eine Beschädigung des Glas- oder Glaskeramikmaterials zu vermeiden. Hermetisch dicht bedeutet in dieser Anmeldung, dass die Helium-Leckrate geringer als 1 · 10⁻⁸ mbar l/sec. Ist. Gegenüber dem Stand der Technik, bei dem in einem mehrstufigen Prozess eine Kunststoffdichtung für die Durchführung zur Verfügung gestellt werden musste, ist eine hermetisch dichte Verbindung des erfindungsgemäßen Durchführungsbauteils mit dem Gehäuseteil in einem einzigen einfachen Verfahrensschritt herstellbar.

Des Weiteren kann die Auswahl des Grundkörpers auch mit Blick auf das Material des Gehäuseteils erfolgen, sowohl was die Randausführung als auch was die Materialhärte betrifft und insbesondere auch die Methode zum Verschließen des Gehäuses. Besteht das Gehäuse der Batteriezelle beispielsweise aus Aluminium, so kann als Material für den Grundkörper ebenfalls Aluminium gewählt werden.

Des Weiteren ist es möglich, zusätzlich zu den Durchführungen im Gehäuseteil des Gehäuses der Batteriezelle auch noch andere Funktionen einzubringen, beispielsweise ein Sicherheitsventil und/oder eine Batteriefüllöffnung.

Erfindungsgemäß umfasst der Leiter, insbesondere der im Wesentlichen stiftförmige Leiter, als Material Aluminium, Aluminiumlegierungen, Magnesium, Magnesiumlegierungen, Kupfer, Kupferlegierungen, Silber, Gold, eine Silberlegierung oder eine Goldlegierung. Für den stiftförmigen Leiter wird insbesondere Kupfer (Cu) oder eine Kupferlegierung verwandt, wenn der stiftförmige Leiter an eine Kathode der elektrochemischen Zelle bzw. Batteriezelle angeschlossen wird und Aluminium (Al) oder eine Aluminiumlegierung wenn der stiftförmige Leiter an eine Anode angeschlossen wird. Materialien für den Grundkörper sind bevorzugt Metalle wie Stahl, rostfreier Stahl, Edelstahl, bevorzugt Leichtmetalle, insbesondere Titan, Titanlegierungen, Aluminium, Aluminiumlegierungen, Magnesium oder Magnesiumlegierungen, ohne hierauf beschränkt zu sein.
In vorliegender Anmeldung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Werden die Leichtmetalle zudem als Materialien für die Leiter, beispielsweise dem stiftförmigen Leiter oder das Elektrodenverbindungsbauteil verwandt, so zeichnen sich die Leichtmetalle des Weiteren noch durch eine spezifische elektrische Leitfähigkeit im Bereich 5 · 10⁶ S/m bis 50 · 10⁻⁶ S/m aus. Bei Einsatz in Druckglasdurchführungen liegt zudem noch der Ausdehnungskoeffizient α für den Bereich 20° C bis 350° C im Bereich 18 10⁻⁶/K bis 30 · 10⁻⁶/K
Im Allgemeinen haben Leichtmetalle Schmelztemperaturen im Bereich 350° C bis 800° C.

In vorliegender Anmeldung wird unter einem Durchführungsbauteil ein Bauteil verstanden, das Teil einer elektrischen Durchführung eines Leiters durch ein Gehäuse ist. Das Durchführungsbauteil kann den Leiter und eine Kopfteil umfassen. In einer besonderen Ausgestaltung weist die Durchführung neben einem Durchführungsbauteil zusätzlich einen Grundkörper auf in den wenigstens der stiftförmige Leiter des Durchführungsbauteiles in einem Glas- oder Glaskeramikmaterial eingeglast ist. Der Grundkörper mit dem eingeglasten Durchführungsbauteil kann als gesamtes in eine Öffnung in einem Gehäuseteil der Batteriezelle eingesetzt werden und stellt dann die Durchführung dar. Alternativ kann das Durchführungsbauteil auch direkt in die Öffnung des Gehäuseteiles in einem Glas- oder Glaskeramikmaterial eingeglast werden. Das Durchführungsbauteil und das umgebende Glas- oder Glaskeramikmaterial stellen dann die Durchführung dar.

Bevorzugt kann der Grundkörper als ringförmiger Grundkörper ausgebildet, bevorzugt in kreisrunder Form, aber auch in ovaler Form. Die ovale Form ist insbesondere dann bevorzugt, wenn das Gehäuseteil, insbesondere der Batteriedeckel, in deren Öffnung(en) das Durchführungsbauteil selbst und/oder die Durchführung, bestehend aus Durchführungsbauteil und Grundkörper eingebracht ist, eine schmale längliche Form aufweist und das Glas- bzw. Glaskeramikmaterial, mit dem der stiftförmige Leiter durch das Gehäuseteil in der Öffnung hindurchgeführt wird, vollständig zwischen dem Gehäuseteil und dem stiftförmigen Leiter oder dem Gehäuseteil beziehungsweise Gehäusebauteil und dem Grundkörper und dem stiftförmigen Leiter eingebracht ist. Eine Ausgestaltung mit Grundkörper erlaubt es, die Durchführung, bestehend aus einem Durchführungsbauteil mit einem im Wesentlichen stiftförmigen Leiter und einem im Wesentlichen ringförmigen Grundkörper vorzufertigen.

Bevorzugt werden als Glas- oder Glaskeramikmaterial für die Einglasung des im Wesentlichen stiftförmigen Leiters Materialien ausgewählt, die eine Verschmelztemperatur aufweisen, die geringer ist als die Schmelztemperatur des Gehäusebauteils oder des Grundkörpers und/oder des im Wesentlichen stiftförmigen Leiters. Besonders bevorzugt sind hier Glas- oder Glaskeramikdurchführungen mit niedrigen Verschmelztemperaturen, bevorzugt Zusammensetzungen, umfassend die nachfolgenden Komponenten:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |

| | |
|---|---|
| Na₂O | 0-30 mol-%, insbesondere 0-20 mol-% |
| M₂O | 0-20 mol-%, insbesondere 12-19 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 0-10 mol-%, insbesondere 1-5 mol-%, ganz bevorzugt 2-5 mol-%. |

Insbesondere bevorzugt ist die Zusammensetzung umfassend die nachfolgenden Komponenten:

| | |
|---|---|
| P₂O₅ | 38-50 mol.-%, insbesondere 39-48 mol-% |
| Al₂O₃ | 3-14 mol.-%, insbesondere 4-12 mol-% |
| B₂O₃ | 4-10 mol.-%, insbesondere 4-8 mol-% |
| Na₂O | 10-30 mol.-%, insbesondere 14-20 mol-% |
| K₂O | 10-20 mol.-%, insbesondere 12-19 mol-% |
| PbO | 0-10 mol.-%, insbesondere 0-9 mol-%. |

Die zuvor angegebenen Glaszusammensetzungen zeichnen sich nicht nur durch eine niedrige Verschmelztemperatur und ein niedriges Tg aus, sondern auch dadurch, dass sie gegenüber Batterie-Elektrolyten eine ausreichend hohe Beständigkeit aufweisen und insoweit die geforderte Langzeitbeständigkeit gewährleisten.

Bei den als bevorzugt angegebenen Glasmaterialien handelt es sich um stabile Phosphatgläser, die einen deutlich niedrigeren Gesamtalkaligehalt als bekannte Alkali-Phosphat-Gläser aufweisen.

Durch die in der Regel hohe Kristallisationsstabilität der Phosphatgläser wird sichergestellt, dass das Aufschmelzen der Gläser in der Regel auch bei Temperaturen < 600° C nicht behindert wird. Dies ermöglicht es, dass die angegebenen Glaszusammensetzungen als Glaslot verwendet werden können, da das Aufschmelzen der Glaszusammensetzungen auch bei Temperaturen < 600° C nicht behindert wird.

Die zuvor genannten Glaszusammensetzungen weisen Li auf, das in die Glasstruktur eingebaut ist. Hierdurch eignen sich die Glaszusammensetzungen, insbesondere für Li-Ionen-Speichereinrichtungen, die Elektrolyten basierend auf Li, beispielsweise einer 1 M LiPF₆-Lösung umfassend eine 1:1 Mischung aus Ethylencarbonat und Dimethylcarbonat umfassen.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme bzw. natriumfreie Gläser besonders beständig gegenüber Elektrolyten, insbesondere solchen, wie sie in Li-Ionen-Speichereinrichtungen verwandt werden, sind.

Die Beständigkeit der Glaszusammensetzung gegenüber den Batterie-Elektrolyten kann dadurch geprüft werden, dass die Glaszusammensetzung in Form eines Glaspulvers mit einer Körnung d50 = 10 µm gemahlen wird und in den Elektrolyten für eine vorbestimmte Zeit, beispielsweise eine Woche, ausgelaugt wird. D50 bedeutet, dass 50 % aller Partikel oder Körner des Glaspulvers kleiner oder gleich einem Durchmesser von 10 µm ist. Als nicht wässriger Elektrolyt wird beispielsweise eine Carbonatmischung aus Ethylencarbonat und Dimethylcarbonat im Verhältnis 1:1 mit 1 M LiPF₆ als Leitsalz verwandt. Nachdem das Glaspulver dem Elektrolyten ausgesetzt war, kann das Glaspulver abfiltriert und der Elektrolyt auf Glasbestandteile, die aus dem Glas ausgelaugt wurden, untersucht werden. Hierbei hat sich herausgestellt, dass bei den Phosphatgläsern in den zuvor beschriebenen Zusammensetzungsbereichen überraschenderweise eine derartige Auslaugung in nur geringem Maß von weniger als 20 Massenprozent vorliegt, in besonderen Fällen kann auch eine Auslaugung < 5 Massenprozent erreicht werden. Des Weiteren zeigen derartige Glaszusammensetzungen eine thermische Ausdehnung α im Bereich 20° C bis 350° C > 14 · 10⁻⁶/K, insbesondere zwischen 15 · 10⁻⁶/K und 25 · 10⁻⁶/K. Ein weiterer Vorteil der zuvor angegebenen Glaszusammensetzung ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für Al-Verschmelzungen entgegen den bisherigen Verfahren nicht notwendig. Vielmehr kann eine derartige Verschmelzung auch unter Luft erfolgen. Für beide Arten der Verschmelzungen kann als Schutzgas N₂ oder Ar benutzt werden. Als Vorbehandlung zum Verschmelzen wird das Metall, insbesondere das Leichtmetall gereinigt und/oder geätzt, wenn nötig gezielt oxidiert oder beschichtet. Während des Prozesses werden Temperaturen zwischen 300° C und 600 °C mit Heizraten von 0.1 bis 30 K/min und mit Haltezeiten von 1 bis 60 min verwandt.
Die Verschmelztemperatur kann beispielsweise über die Halbkugeltemperatur wie in R. Görke, K.-J. Leers: Keram. Z. 48 (1996) 300-305, bzw. nach DIN 51730, ISO 540 oder CEN/TS 15404 und 15370-1 beschrieben, bestimmt werden. Die Messung der Halbkugeltemperatur ist ausführlich in der DE 10 2009 011 182 A1 beschrieben. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann. Wird ein kristallisationsfreies Glas beispielsweise in Form eines Glaspulvers aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glas, dass die Betriebstemperatur, welcher die Fügeverbindung dauerhaft ausgesetzt sein kann, nicht höher als die Verschmelztemperatur sein darf. Glaszusammensetzungen wie sie vorliegend eingesetzt werden, werden im Allgemeinen oftmals aus einem Glaspulver hergestellt, das aufgeschmolzen wird und unter Wärmeeinwirkung mit den zu verbindenden Bauteilen die Fügeverbindung ergibt. Die Verschmelztemperatur bzw. Schmelztemperatur entspricht in der Regel etwa der Höhe der so genannten Halbkugeltemperatur des Glases. Gläser mit niedrigen Verschmelztemperaturen bzw. Schmelztemperatur werden auch als Glaslote bezeichnet. Anstelle von Verschmelz- oder Schmelztemperatur wird in einem solchen Fall von Lottemperatur bzw. Löttemperatur geredet. Die Verschmelztemperatur bzw. Lottemperatur kann um ±20 K von der Halbkugeltemperatur abweichen.

Besonders bevorzugt ist es, wenn das Gehäuseteil beziehungsweise Gehäusebauteil der Batteriezelle Außen- und Innenseite aufweist und das Durchführungsbauteil oder die Durchführung mit Durchführungsbauteil und Grundkörper mit der Innen- oder Außenseite des Gehäuseteils verbunden wird, insbesondere beispielsweise durch Bördeln, Schweißen, Einpressen, Löten oder Einschrumpfen.

In einer alternativen Ausführungsform einer Durchführung wird ein Leiter, insbesondere ein stiftförmiger Leiter mit einem Kopfteil in eine Öffnung eines Gehäuses, insbesondere eines Batteriezellengehäuses, eingeglast und zwar derart, dass das Kopfteil mit der Außenseite des Batteriegehäuses verbunden wird Die Anordnung des Kopfteiles an der Außenseite dient der Verstärkung und Festigkeitssteigerung, insbesondere bei dünnwandigen Batteriegehäusen. An der Innenseite des Batteriegehäuses wird in einem weiteren Verfahrensschritt nach der Einglasung ein Aufsatzbauteil mit dem im Wesentlichen stiftförmigen Leiter verbunden. Zur Stabilisierung kann zwischen dem Aufsatzbauteil und der Innenseite des Batteriegehäuses eine Stützscheibe zur Stabilisierung vorgesehen sein. Das Aufsatzbauteil kann mit dem nach innen ragenden, im Wesentlichen stiftförmigen Leiter beispielsweise verschweißt oder verlötet sein. Das Aufsatzbauteil dient der Verbindung mit den Elektroden der Batteriezelle, es kann aber auch zur Kontaktierung der Batteriezellen untereinander dienen.

Eine weitere Möglichkeit, das Batteriegehäuse zu verstärken, besteht darin, einen Außenring vorzusehen, der mit der Außenseite des Batteriegehäuses verbunden wird, beispielsweise durch Verschweißen. Nach Anbringen des Außenringes an der Außenseite des Batteriegehäuses bzw. Batteriedeckels wird dann der im Wesentlichen stiftförmige Leiter eingeglast. Ein solches Vorgehen hat den Vorteil, dass beim Einschweißen des im Wesentlichen stiftförmigen Leiters in das Batteriegehäuse bzw. den Deckel Undichtigkeiten vermieden werden. Alternativ wäre es möglich, dass das Batteriegehäuse ein einstückiges Bauteil ist, bei dem die Stärke des Batteriegehäuses in dem Bereich, in dem die Einglasung vorgenommen wird, dadurch erhöht wird, dass das Material des Batteriegehäuses z. B. nach einem Stanzvorgang umgeformt wird.

Ganz bevorzugt handelt es sich bei der Batteriezelle, für die das Batteriegehäuse zur Verfügung gestellt wird, um die Batteriezelle einer Lithium-Ionen-Batterie. Bevorzugt besteht das Gehäusebauteil der Batteriezelle aus einem niedrig schmelzenden Leichtmetall, bevorzugt Aluminium, einer Aluminiumlegierung, Magnesium einer Magnesiumlegierung, Titan, einer Titanlegierung oder aus Stahl, Edelstahl, insbesondere Nirosta-Stahl oder auch aus AlSiC.

Die Erfindung soll nachfolgend anhand der Ausführungsbeispiele und der Zeichnungen ohne Beschränkung hierauf näher beschrieben werden.
Es zeigen:
- Fig. 1: eine erste Ausgestaltung eines erfindungsgemäßen Durchführungsbauteils mit einem mit diesem verbundenem Elektroden-Verbindungsbauteil gemäß einer ersten Ausführungsform der Erfindung;

- Fig. 2: Durchführungsbauteil mit Elektroden-Verbindungsbauteil gemäß einer zweiten Ausführungsform der Erfindung:
- Fig. 3a-3c: Durchführungsbauteil ohne Elektroden-Verbindungsbauteil in einer ersten Ausführungsform mit einem Grundkörper;
- Fig. 4a-4b: Durchführungsbauteil ohne Elektroden-Verbindungsbauteil mit einem Grundkörper in einer zweiten Ausführungsform der Erfindung;
- Fig. 5a-5b: Durchführungsbauteil ohne Verbindungsbauteil gemäß einer dritten Ausführungsform der Erfindung
- Fig. 6a-6b: Batteriezelle mit einem Batteriezellengehäuse und einer Durchführung mit Durchführungsbauteil ohne Kopfteil mit Elektroden-Verbindungsbauteil
- Fig. 7a-7b: Batteriezelle mit einem Batteriezellengehäuse und einer Durchführung mit Durchführungsbauteil mit Kopfteil gemäß der Erfindung mit Elektroden-Verbindungsbauteil.
- Fig. 8a-8d: Durchführungsbauteil mit/ohne Elektrodenverbindungsbauteil und mit/ohne Außenleiterring.

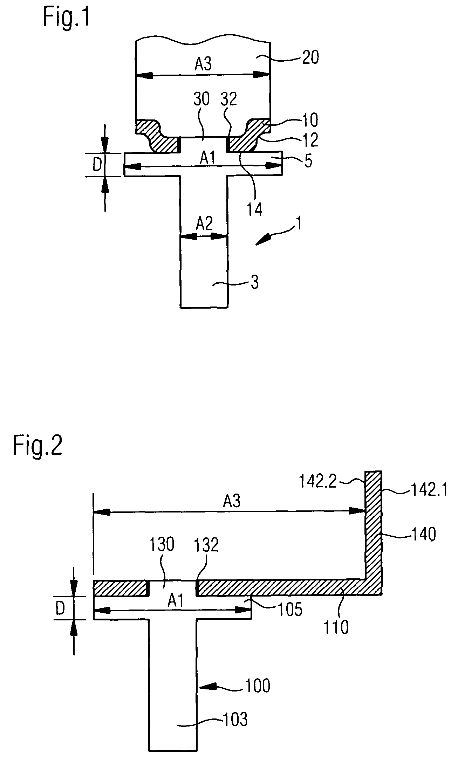

In Figur 1 ist eine erste Ausführungsform eines Durchführungsbauteils 1 mit einem mit dem Durchführungsbauteil 1 verbundenen Elektroden-Verbindungsbauteil 10 gezeigt. Das Elektroden-Verbindungsbauteil 10 wiederum ist mit der Elektrode 20 verbunden, die die Kathode oder Anode der elektrochemischen Zelle beziehungsweise Batteriezelle bildet. Das Durchführungsbauteil weist einen im Wesentlichen stiftförmigen Leiter 3 sowie ein Kopfteil 5 auf. Das Kopfteil 5 des Durchführungsbauteils weist eine Dicke D sowie eine Abmessung A1 im Wesentlichen senkrecht zur Dicke D auf. Wie aus Figur 1 hervorgeht, ist die Abmessung A1 senkrecht zur Dicke D des Bauteiles 5 wesentlich größer, d. h. bei dem Kopfbauteil 5 bzw. Kopfteil 5 handelt es sich um einen im Wesentlichen flachen Gegenstand. Die Ausdehnung bzw. die Abmessungen A2 des mit dem Kopfteil verbundenen im Wesentlichen stiftförmigen Leiters sind geringer als die Abmessung A1 des Kopfteils. Bevorzugt ist die Abmessung A2 der Durchmesser des im Wesentlichen rund ausgebildeten stiftförmigen Leiters 3. Auf Grund der Abmessung A1, die größer als die Abmessung A2 des im Wesentlichen stiftförmigen Leiters ist ragt das Kopfteil 5 über den stiftförmigen Leiter 3 hinaus. Ist auch das Kopfteil 5 im Wesentlichen rund, so ist erfindungsgemäß die Fläche des Kopfteils 5 stets größer als die Fläche des stiftförmigen Leiters 3. Das Kopfteil 5 ist derart ausgebildet, dass es mit dem Elektroden-Verbindungsbauteil 10 verbindbar ist, zu einer mechanisch stabilen und nicht lösbaren Verbindung. In der in Figur 1 gezeigten Ausgestaltung ist das Elektroden-Verbindungsteil mit einer Versteifungsprägung 12 ausgebildet. Der Bereich 14 des Elektroden-Verbindungsteils liegt hingegen am Kopfteil an. Im Bereich 14 ist das Elektroden-Verbindungsbauteil mechanisch stabil, nicht lösbar und elektrisch gut leitend mit dem Kopfteil des Durchführungsbauteils verbunden. Bei der in Figur 1 dargestellten Ausführungsform erfolgt die mechanisch stabile und nicht lösbare und elektrisch leitende Verbindung des Elektroden-Verbindungsteils 10 mit dem Kopfteil 5 des Durchführungsbauteils durch Laserschweißung, Bördeln oder Verstemmen. Um das Elektroden-Verbindungsteil 10 vorbestimmt mit dem Kopfteil 5 des Durchführungsbauteiles zu verbinden, umfasst das Durchführungsbauteil 1 neben dem Kopfteil und dem im Wesentlichen stiftförmigen Leiter ein über das Kopfteil 5 hinausragenden Fortsatz 30, der in beispielsweise eine Zentrieröffnung 32 des Elektroden-Verbindungsbauteils 20 eingreift, so dass durch die Zentrieröffnung 32 und den Fortsatz 30 eine Zentriermöglichkeit für das Elektroden-Verbindungsteil besteht. Hierfür kann der Fortsatz sowohl rund wie nicht-rund ausgeführt sein. Neben einer Zentriermöglichkeit ermöglicht die Ausgestaltung des Fortsatzes auch eine Verdrehsicherung. Dies ist dann der Fall, wenn der Fortsatz und die Zentrieröffnung nicht rund, sondern, z. B. oval ausgebildet sind.

Wie aus Figur 1 hervorgeht, weist das Elektroden-Verbindungsbauteil eine Abmessung A3 auf, die im Wesentlichen der Breite des Elektroden-Verbindungsteils 20 entspricht. Auf diese Art und Weise wird sichergestellt, dass für den gesamten Strom weg von der Batteriezelle bis zu den Elektrodenanschlüssen ein im Wesentlichen gleicher Leitungsquerschnitt gewährleistet wird, sodass keine Verlustwärme im gesamten Leitungspfad auftreten.

Die Versteifungsprägung 12 des Elektroden-Verbindungsteils 20 verhindert ein Verbiegen beim Einbau der Durchführung in ein Gehäuseteil und damit einen Kurzschluss.

Zu einer besseren Verbindung des Elektroden-Verbindungsteils 10 mit dem Kopfteil 5 kann vorgesehen sein, dass das Elektroden-Verbindungsteil eine Oberflächenbeschichtungen beispielsweise aus Kupfer oder Aluminium aufweist. Auch andere Beschichtungsmaterialien, wie z. B. Ag, Ni, Au, Pd und Zn wären möglich. Auch eine Silber- oder Goldlegierung wäre möglich. Die Elektrode selbst kann aus einem beliebigen Material, insbesondere einem Metall, bevorzugt einem Leichtmetall wie beispielsweise Aluminium, eine Aluminiumlegierung, Magnesium, eine Magnesiumlegierung sein.

Besonders bevorzugt ist es, wenn sowohl das Elektroden-Verbindungsbauteil 10 wie auch das Durchführungsbauteil in einem separaten Prozess hergestellt werden. Dies ermöglicht sowohl von der Materialauswahl wie auch vom Herstellverfahren eine optimierte Prozessführung. Erst nachträglich wird dann eine Verbindung beispielsweise durch einen Verbindungsprozess, wie Laserschweißen, Ultraschallschweißen, Bonden, Reibschweißen, Verstemmen, Bördeln, Widerstandsschweißen oder Löten zwischen dem Elektroden-Verbindungsbauteil und dem Kopfteil des Durchführungsbauteiles hergestellt.

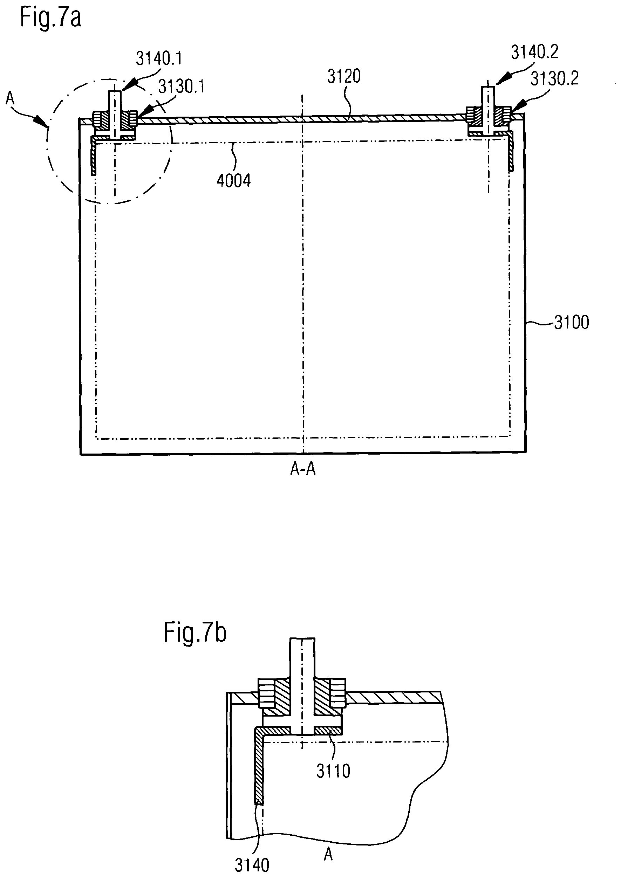

Wie aus Figur 1 hervorgeht, zeichnet sich das dargestellte Durchführungsbauteil mit Elektroden-Verbindungsbauteil durch eine sehr flache Bauweise aus, die wenig Innenbauraum in einer Batteriezelle verbrauchen. Dies ist detailliert in den Figuren 7a bis 7b gezeigt. Isolierungsbauteile im Batterieinnenraum beziehungsweise Batteriezelleninnenraum können mit der erfindungsgemäßen Ausgestaltung erreicht werden.

In Figur 2 ist eine Ausgestaltung der Erfindung gezeigt, bei der das Elektroden-Verbindungsteil 110 eine individuelle Ausgestaltung aufweist und beispielsweise im Bereich 140 eine individuelle Anoden- bzw. Kathodenverbindung zur elektrochemischen Zelle der Batterie zur Verfügung zu stellen. Im Bereich der individuellen Anoden- bzw. Kathodenverbindung 140 können die Oberflächen 142.1, 142.2 optional behandelt sein, beispielsweise durch das Aufbringen von Metallen, insbesondere Cu oder Al. Im Allgemeinen wird Cu dann verwandt, wenn der Bereich 140 an die Kathode der elektrochemischen Zelle angeschlossen wird und Al wird verwandt, wenn der Bereich 140 an die Anode angeschlossen wird. Als Grundmaterial für das nicht beschichtete Elektroden-Verbindungsbauteil 110 kann Aluminium oder andere gut leitende Materialien verwendet werden. Deutlich zu erkennen ist, dass bei der Ausgestaltung gemäß Figur 2 das Elektroden-Verbindungsbauteil 110 in seiner Abmessung A3 über die Abmessung A1 des Kopfteils 105 des Durchführungsbauteiles 100 hinausragt. Bei der Ausgestaltung gemäß Figur 2 sind gleiche Bauteile wie in Figur 1 mit um 100 erhöhten Bezugsziffern angegeben. Das Durchführungsbauteil 100 weist wiederum einen im Wesentlichen stiftförmigen Leiter 103 sowie ein Kopfteil 105 auf, wobei das Kopfteil wiederum eine Dicke D besitzt. Wiederum ist bei der Ausgestaltung gemäß Fig. 2 im Elektroden-Verbindungsbauteil eine im Wesentlichen kreisförmige Zentrierbohrung 132 vorgesehen, und das Durchführungsbauteil weist einen Fortsatz 130 auf, der in die im Wesentlichen kreisförmige Zentrierungsbohrung des Elektroden-Verbindungsteils eingreift. Als Material für das Elektroden-Verbindungsbauteil 110 kann beispielsweise Kupfer oder Aluminium verwendet werden. Auch andere gut leitende Materialien sind möglich. Die Materialien Kupfer oder Aluminium können auch für den Leiter, insbesondere den im Wesentlichen stiftförmigen Leiter 103 sowie das Kopfteil 105 und den Fortsatz 130 eingesetzt werden. Andere mögliche Materialien sind CuSiC, AlSiC, NiFe, eine Kupferseele, d. h. ein NiFe-Mantel mit Kupferinnenteil, Aluminiumlegierungen, Magnesium, Magnesiumlegierungen, Kupferlegierungen, Silber, eine Silberlegierung, Gold, eine Goldlegierung sowie eine Kobalt-EisenLegierung. Bevorzugt handelt es sich bei dem Kopfteil 105 im Wesentlichen um ein kreisrundes Bauteil, ebenso bei dem Fortsatz 130. Das Elektroden-Verbindungsbauteil 110 ist dagegen bevorzugt in Rechteckform ausgebildet, wobei jeweils individuelle Anoden-/Kathodenverbindungen an den Rändern vorgesehen sind. Das Elektroden-Verbindungsbauteil kann eine Versteifungsprägung aufweisen. Der Fortsatz kann auch nicht kreisrund ausgebildet sein und stellt dann eine Verdrehsicherung dar.

Besonders bevorzugt ist es wenn das Durchführungsbauteil nicht direkt in eine Gehäuseöffnung eingeglast wird, sondern vor Einsetzen in die Öffnung in einen Grundkörper. Die Durchführung wird dann von dem Durchführungsbauteil, dem Glas- oder Glaskeramikmaterial und dem Grundkörper gebildet.

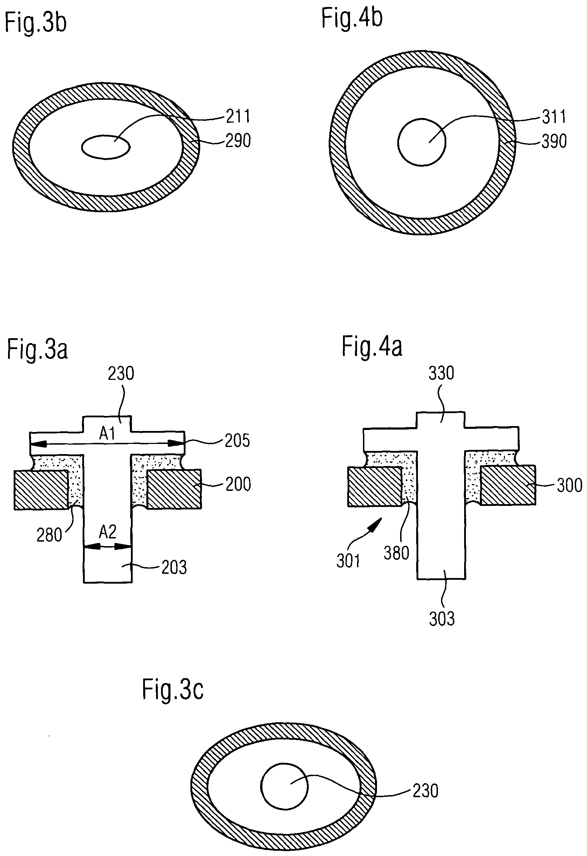

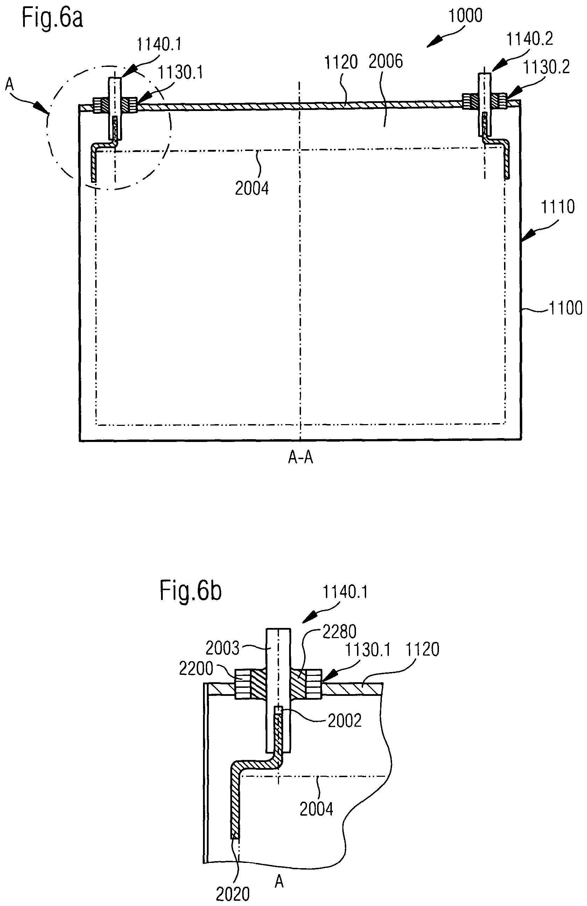

In den Fig. 3a-5b wird das Einglasen des Durchführungsbauteiles 201, 301 in einen Grundkörper 200, 300 ergebend eine Durchführung 1000, die in eine Öffnung (siehe Figuren 6a-7b) in einem Gehäusebauteil (siehe Figuren 6a-7b) beispielsweise einem Batteriegehäuses beziehungsweise Batteriezellengehäuses eingesetzt werden kann, gezeigt. Ein Einglasen in einen Grundkörper, wie in den Figuren 3a-5b gezeigt hat, gegenüber dem direkten Einglasen in eine Öffnung den Vorteil, dass eine Vormontage möglich ist, d. h. die Einglasung des Durchführungsbauteils in den Grundkörper kann vor Einsetzen der Durchführung in die Öffnung im Gehäuseteil, insbesondere in das Batteriezellengehäuse erfolgen. Bei dem in den Figuren 6a-7b dargestellten Batteriezellengehäuse handelt es sich um ein Gehäuse für eine Batteriezelle, insbesondere einer Lithium-Ionen-Batterie.

Der Grundkörper 200, der den im Wesentlichen stiftförmigen Leiter 203 des Durchführungsbauteiles 201 aufnimmt, ist bevorzugt im Wesentlichen ringförmig. Das Material des Grundkörpers 200 ist bevorzugt ein Metall, insbesondere ein Leichtmetall, beispielsweise Aluminium, AlSiC, aber auch Stahl, rostfreier Stahl, beispielsweise Edelstahl. Auch eine Aluminiumlegierung, Magnesium, eine Magnesiumlegierung, eine Titanlegierung oder Titan sind möglich. Um eine hermetische Durchführung des Leiters, insbesondere des im Wesentlichen stiftförmigen Leiters 203 durch den Grundkörper 200 und damit die Öffnung im Gehäuseteil bereitzustellen, ist der Leiter, insbesondere der im Wesentlichen stiftförmige Leiter 203 in einen Glaspfropfen aus einem Glas- oder Glaskeramikmaterial eingeschmolzen, d.h. der Grundkörper 200 und der im Wesentlichen stiftförmige Leiter 203 sind mit dem Glas- oder Glaskeramikmaterial 280 verschmolzen. Bevorzugt ist vorgesehen, dass die Verschmelztemperatur des Glas- oder Glaskeramikmaterials 20 K bis 100 K unterhalb der Schmelztemperatur des Materials des Grundkörpers 200 oder des Gehäuseteiles, in den die Öffnung eingelassen ist (nicht dargestellt) und/oder des stiftförmigen Leiters liegt. Ist der Grundkörper 200 aus einem niedrig schmelzenden Metall, insbesondere einem Leichtmetall, bevorzugt Aluminium, einer Aluminiumlegierung, Magnesium, einer Magnesiumlegierung, Titan, einer Titanlegierung oder AlSiC, so wird bevorzugt ein Glasmaterial, durch das der Leiter hindurchgeführt wird, eingesetzt, das die nachfolgenden Komponenten in mol.-% umfasst:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, bevorzugt 17-40 mol-% |
| BaO | 0-20 mol-%, insbesondere 0-20 mol-%, ganz bevorzugt 5-20 mol-% |
| Bi₂O₃ | 0-10 mol-%, insbesondere 1-5 mol-%, ganz bevorzugt 2-5 mol-%. |

In einer besonders bevorzugten Ausführungsform umfasst die Glaszusammensetzung nachfolgende Komponenten in mol.-%:

| | |
|---|---|
| P₂O₅ | 38-50 mol.-%, insbesondere 39-48 mol.-% |
| Al₂O₃ | 3-14 mol.-%, insbesondere 4-12 mol.-% |
| B₂O₃ | 4-10 mol.-%, insbesondere 4-8 mol.-% |
| Na₂O | 10-30 mol.-%, insbesondere 14-20 mol.-% |
| K₂O | 10-20 mol.-%, insbesondere 12-19 mol.-% |
| PbO | 0-10 mol.-%, insbesondere 0-9 mol.-%. |

Nachfolgend werden acht Ausführungsbeispiele in Tabelle 1 für die zuvor genannten Glaszusammensetzungen angegeben.

**Tabelle 1:**

| | Ausführungsbeispiele: | | | | | | | | | |
|---|---|---|---|---|---|---|---|---|---|---|
| | | AB1 | AB2 | AB3 | AB4 | AB5 | AB6 | AB7 | AB8 | |
| | Mol-% | | | | | | | | | |
| | P₂O₅ | 47.6 | 43.3 | 43.3 | 43.3 | 37.1 | 40.0 | 42,0 | 46,5 | |
| | B₂O₃ | 7.6 | 4.8 | 4.7 | 4.8 | 4.9 | 6.0 | 6,0 | 7,6 | |
| | Al₂O₃ | 4.2 | 8.6 | 8.7 | 2.0 | 2 | 12.0 | 12,0 | 4,2 | |
| | Na₂O | 28.3 | 17.3 | | | | 15.0 | 16.0 | 28,3 | |
| | K₂O | 12.4 | 17.3 | 17.3 | | | 18.0 | 19.0 | 12,4 | |
| | PbO | | | | | | 9.0 | | | |
| | BaO | | 8.7 | 8.7 | 15.4 | 14 | | | | |
| | Li₂O | | | 17,3 | 34,6 | 42,1 | | | | |
| | Bi₂O₃ | | | | | | | 5 | 1 | |
| | Halbkugel Temperatur(°C) | 513 | 554 | 564 | 540 | 625 | | 553 | 502 | |
| | α(20-300° C) (10⁻⁶/K) | 19 | 16,5 | 14,9 | 13,7 | 14,8 | 16.7 | 16,0 | 19,8 | |
| | Tg (°C) | 325 | 375 | 354 | 369 | 359 | 392 | 425 | 347 | |
| | Dichte [g/cm³] | 2,56 | | | | | 3 | 3,02 | 2,63 | |
| | Auslaugung In Ma-% | 18,7 | 14,11 | 7,66 | 12,63 | 1,47 | 3,7 | 29,01 | 8,43 | |
| | Gewichtsverlust(%) nach 70h in 70°C-Wasser | 10,7 | 0,37 | 0,1 | 0,13 | 0,13 | n.B. | 0,006/0,001 | 0.45/0,66 | |

Die oben angegebene spezielle Glaszusammensetzung zeichnet sich dadurch aus, dass die Glasmaterialien sehr hohe thermische Dehnungen α (20°C - 300° C) aufweisen, die im Bereich > 15 x 10⁻⁶ K⁻¹, bevorzugt im Bereich 15 x 10⁻⁶ K⁻¹ bis 25 x 10⁻⁶ K⁻¹ liegen und damit in dem Bereich der thermischen Ausdehnung von Leichtmetallen wie Aluminium, aber auch von ähnlichen Metallen für die im Wesentlichen stiftförmigen Leiter 203, die durch das Glasmaterial durchgeführt, nämlich beispielsweise Kupfer. So besitzt Aluminium bei Zimmertemperatur eine thermische Ausdehnung α = 23 x 10⁻⁶/K, Kupfer von 16,5 x 10⁻⁶/K. Um zu verhindern, dass beim Einglasen das Leichtmetall des Grundkörpers und eventuell auch des Metallstifts schmilzt oder deformiert, liegt die Schmelztemperatur des Glasmaterials unterhalb der Schmelztemperatur des Materials des Grundkörpers und/oder Leiters. Die Verschmelztemperatur der angegebenen Glaszusammensetzung liegt dann im Bereich 250° C bis 650° C. Das Einglasen des Leiters, insbesondere des im Wesentlichen stiftförmigen Leiters 203 in den Grundkörper 200 vor Einsetzen der Durchführung in die Öffnung (nicht dargestellt) wird dadurch erreicht, dass das Glas zusammen mit dem Leiter, insbesondere dem stiftförmigen Leiter, auf die Verschmelztemperatur des Glases erwärmt wird, so dass das Glasmaterial erweicht und den Leiter, insbesondere den stiftförmigen Leiter, umschließt und am Grundkörper 200 anliegt. Wird, wie oben beschrieben, beispielsweise Aluminium als Leichtmetall mit einem Schmelzpunkt T_{Schmelz} = 660,32° C für den Grundkörper 200 verwandt, so liegt die Verschmelztemperatur des Glasmaterials, wie oben angegeben, bevorzugt im Bereich 350° C bis 640° C. Bevorzugt ist das Material des stiftförmigen Leiters 203 identisch zum Material des Grundkörpers, was den Vorteil hat, dass der Ausdehnungskoeffizient für den Grundkörper und für den Metallstift identisch ist. Der Ausdehnungskoeffizient α des Glas- oder Glaskeramikmaterials im Bereich 20° C bis 300° C kann entweder an das Material angepasst sein, dann liegt keine Druckglasdurchführung vor oder einen anderen Ausdehnungskoeffizienten α wie der Grundkörper beziehungsweise stiftförmige Leiter aufweisen, dann liegt eine Druckglasdurchführung vor. Der Vorteil der Druckglasdurchführung sind höhere Auszugskräfte für das Durchführungsbauteil. Alternativ kann der stiftförmige Leiter Kupfer umfassen, CuSiC- oder NiFe-Legierungen.
Unter Verschmelztemperatur bzw. Verschmelzungstemperatur des Glases oder der Glaskeramik wird diejenige Temperatur des Glases oder der Glaskeramik verstanden, bei der das Glasmaterial erweicht und so an dem mit dem Glasmaterial zu verschmelzenden Metall dicht anliegt, so dass eine Fügeverbindung zwischen dem Glas oder der Glaskeramik und dem Metall erhalten wird.

Die Verschmelztemperatur kann beispielsweise über die Halbkugeltemperatur wie in R. Görke, K.-J. Leers: Keram. Z. 48 (1996) 300-305 bzw. nach DIN 51730, ISO 540 oder CEN/TS 15404 und 15370-1 beschrieben, bestimmt werden. Die Messung der Halbkugeltemperatur ist ausführlich in der DE 10 2009 011 182 A1 erläutert. Die aus der DE 10 2009 011 182 A1 bekannt gewordenen Glaszusammensetzung, die als Glaslote verwendet werden können, betreffen Hochtemperaturanwendungen, z. B. bei Brennstoffzellen.
Die zuvor angegebenen Phosphatglaszusammensetzungen weisen einen Li-Anteil von bis zu 45 mol-%, insbesondere bis zu 35 mol-%, auf. Überraschenderweise sind diese Glaszusammensetzungen kristallisationsstabil, d.h. in einem nachgeschalteten Sinterschritt zeigen sie keine störende bzw. wesentliche Kristallisation.

Die zuvor genannten Glaszusammensetzungen weisen Li auf, das in die Glasstruktur eingebaut ist. Hierdurch eignen sich die Glaszusammensetzungen, insbesondere für Li-Ionen-Speichereinrichtungen, die Elektrolyten basierend auf Li, beispielsweise einer 1 M LiPF₆-Lösung umfassend eine 1:1 Mischung aus Ethylencarbonat und Dimethylcarbonat umfassen.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme mit bis zu 20 mol-% Na₂O bzw. natriumfreie Gläser besonders beständig gegenüber Elektrolyten, insbesondere solchen, wie sie in Li-Ionen-Speichereinrichtungen verwandt werden, sind. Besonders bevorzugt sind bis auf Verunreinigungen bleifreie Gläser, d.h. der Bleigehalt ist weniger als 100 ppm, bevorzugt weniger als 10 ppm, insbesondere weniger als 1ppm.

Die zuvor angegebenen speziellen Glaszusammensetzungen zeigen eine thermische Ausdehnung α im Bereich 20° C bis 350° C > 14 ·10⁻⁶/K, insbesondere zwischen 15 ·10⁻⁶/K und 25 · 10⁻⁶/K. Ein weiterer Vorteil der zuvor angegebenen Glaszusammensetzung ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für AI-Verschmelzungen entgegen den bisherigen Verfahren nicht notwendig. Vielmehr kann eine derartige Verschmelzung auch unter Luft erfolgen. Für beide Arten der Verschmelzungen kann als Schutzgas N₂ oder Ar benutzt werden. Als Vorbehandlung zum Verschmelzen wird das Metall, insbesondere das Leichtmetall gereinigt und/oder geätzt, wenn nötig gezielt oxidiert oder beschichtet. Während des Prozesses werden Temperaturen zwischen 300° C und 600 °C mit Heizraten von 0.1 bis 30 K/min und mit Haltezeiten von 1 bis 60 min verwandt.

Das Gehäuseteil, in das die in den vorangegangenen Figuren dargestellte Durchführung bzw. Durchführungsbauteil eingebracht wird, ist ebenfalls bevorzugt aus Aluminium hergestellt. Das Gehäuseteil weist eine Außenseite und eine Innenseite auf. Die Außenseite ist dadurch gekennzeichnet, dass sich von der Batteriezelle nach außen erstreckt, die Innenseite dadurch, dass sie sich zum Elektrolyten der Batteriezelle, beispielsweise bei einem Lithium-Ionen-Akkumulator hin erstreckt. Dies ist in den Figuren 6a bis 7b gezeigt.

Bei Lithium-Ionen-Batterien wird als Elektrolyt typischerweise ein nicht wässriger Elektrolyt, bestehend typischerweise aus einem Karbonat, insbesondere aus einer Karbonatmischung, beispielsweise einer Mischung aus Ethylenkarbonat und Dimethylkarbonat, verwandt, wobei die aggressiven, nicht wässrigen Batterieelektrolyten ein Leitsalz aufweisen, beispielsweise das Leitsalz LiPF₆ z. B. in Form einer 1-molaren Lösung.

Die in den Figuren 3a-5b dargestellten Durchführungsbauteile 201, 301 weisen einen im Wesentlichen stiftförmigen Leiter 203 sowie ein Kopfteil 205 gemäß den Figuren 1a-2b auf, bei dem die Abmessungen A1 des Kopfteiles 205 größer sind als die Abmessungen A2 des im Wesentlichen stiftförmigen Leiters 203. Der Kopfteil 205 ist derart ausgestaltet, dass es mit einem Elektroden-Verbindungsteil, wie in den Figuren 1a bis 2b dargestellt, verbindbar ist, insbesondere weist er einen Fortsatz 230 auf, der als Zentrierteil für das Elektroden-Verbindungsteil dienen kann. Das an dem Kopfteil 205 anbringbare Elektroden-Verbindungsteil (in Figuren 1a bis 2b dargestellt) liegt nach Einbau in die Öffnung des Gehäuseteils zur Innenseite hin, d. h. zum Elektrolyten der Batteriezelle hin. Dies ist in den Figuren 7a-7b gezeigt. Die Einglasung kann bei der Ausgestaltung gemäß den Fig. 3a bis 5b nicht nur zwischen dem stiftförmigen Leiter 203, der durch den ringförmigen Grundkörper 200, der wiederum in ein Gehäuseteil eingesetzt werden kann, und dem Grundkörper 200 erfolgen, sondern das Glasmaterial bzw. Glaskeramikmaterial 280 kann auch zwischen dem Grundkörper 200 und dem Kopfteil 205 eingebracht werden. Dies hat den Vorteil der Stabilisierung der Elektroden-Verbindungsbauteile, da diese nicht freistehen.

Über das Kopfteil 205 hinaus ragt ein Fortsatz 230, z. B. in das Innere der Batteriezelle (wie in den Figuren 7a-7b gezeigt) hinein, wobei der Fortsatz 230 der Zentrierung für das Elektroden-Verbindungsteil (in Figur 1a bis 2b gezeigt) dienen kann. Der Fortsatz 230 des Leiters ist bevorzugt stets rund ausgebildet, unabhängig von der Form des im Wesentlichen stiftförmigen Leiters 203, der z. B. oval oder rund sein kann.

Auch der ringförmige Grundkörper 200 kann unterschiedliche Formen annehmen, beispielsweise, wie in den Fig. 3a bis 3c gezeigt, eine ovale Außenform 290, wobei dann bevorzugt auch der Leiter im Bereich, in dem dieser durch den ovalen Grundkörper hindurchgeführt wird, d.h. im Bereich 211 ebenfalls oval ausgebildet sein kann. Der Fortsatz 230 , wie in Fig. 3c dargestellt, ist in der Draufsicht jedoch rund zum Anschluss des Elektroden-Verbindungsteiles.

Alternativ zu einer ovalen Ausführungsform sowohl vom ringförmigen Grundkörper, was insbesondere bei schmalen Batteriedeckeln von Vorteil ist, ist es möglich, sowohl den stiftförmigen Leiter als auch den Fortsatz und den Grundkörper ringförmig auszubilden.

Ein ringförmiger Grundkörper mit ringförmigem stiftförmigem Leiter ist in den Fig. 4a bis 4b angegeben. Gleiche Bauteile wie in den Fig. 3a bis 3c sind mit 100 erhöhten Bezugsziffern bezeichnet, d.h. in den Fig. 4a bis 4b bezeichnet, beispielsweise der stiftförmige Leiter die Bezugsziffer 303, das Kopfteil 305 und 300 den ringförmigen Grundkörper. Die ringförmige Außenform ist mit 390 bezeichnet und der Bereich, in dem der Leiter durch den Grundkörper hindurchgeführt wird, mit 311.

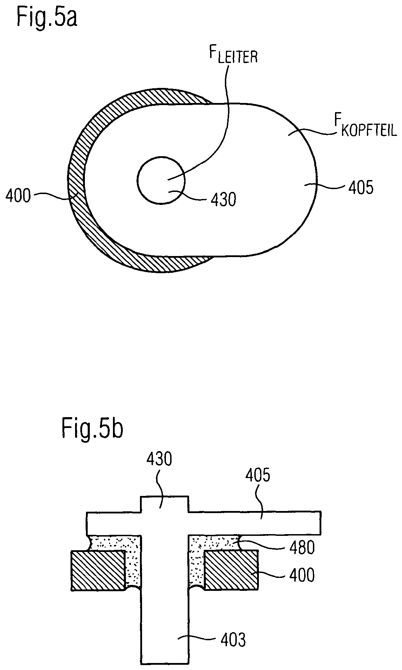

Um weitere Verbindungsteile beziehungsweise Verbindungsanteile an den Elektroden anzubringen, ist in einer Ausführungsform gemäß Fig. 5a bis 5b vorgesehen, die Kopffläche F_{KOPFTEIL} des Kopfteils 405 auszukragen, d.h. über den Durchmesser der Öffnung hinaus vorzusehen. Die Auskragung des Kopfteils 405 erlaubt zusätzlich zu den zuvor beschriebenen Verbindungsverfahren die Verbindung der Verbindungsbauteile aufgrund der Zugänglichkeit von zwei Seiten auch mit Durchschweißen, Widerstandsschweißen oder Nieten vorzunehmen. Gut zu erkennen ist in Fig. 5a insbesondere das erfindungsgemäße Merkmal des Durchführungsbauteiles, dass die Fläche des Kopfteiles 405 (F_{KOPFTEIL}) größer ist, als die Fläche des stiftförmigen Leiters 403 (F_{LEITER}). Da bei der Ausführung gemäß Fig. 5a die Abmessungen und Form des Fortsatzes 430 des stiftförmigen Leiters 403 entsprechen, ist die in der Draufsicht dargestellte Querschnittsfläche des Fortsatzes 430 gleich der Fläche des stiftförmigen Leiters. Gleiche Bauteile wie in den Fig. 3a bis 3c sind mit um 200 erhöhten Bezugsziffern angegeben, d.h. der stiftförmige Leiter trägt die Bezugsziffer 403 und der ringförmige Grundkörper die Bezugsziffer 400. Auf der Auskragung des Kopfteils können beispielsweise Elektroden-Verbindungsteile, wie in Fig. 2a bis 2b gezeigt, angebracht werden, bevorzugt aufgrund der Zugänglichkeit von zwei Seiten der Auskragung wie oben beschrieben durch Widerstandsschweißen oder Nieten.

Alternativ zu den in den Figuren 3a-5b gezeigten Ausgestaltungen des Grundkörpers 200, 300, 400 als einfacher Ring kann dieser auch als konischer Ring (nicht dargestellt) ausgebildet sein, der in eine konisch verlaufende Öffnung im Gehäuseteil eingelassen wird. Die Verbindung zwischen der Durchführung erfolgt wiederum zwischen den Seitenwänden der konischen Öffnung und dem konischen Grundkörper, beispielsweise durch Schweißen, Löten, Einbördeln, Einschrumpfen. Es ist aber auch möglich, den im Wesentlichen konisch verlaufenden ringförmigen Grundkörper in die konische Öffnung im Gehäuseteil beziehungsweise Gehäusebauteiles einzupressen. Durch die konische Ausgestaltung sowohl der Öffnung als auch des Grundkörpers wird eine Relativbewegung der Durchführung in Richtung der Außenseite des Gehäuseteils vermieden, da die konische Bohrung und der konisch ausgestaltete Grundkörper quasi als Widerhaken fungieren und eine Relativbewegung in Richtung Außenseite zu einem Formschluss zwischen Grundkörper der Durchführung und den Seitenwänden der Öffnung führen.

Ein Vorteil der Ausgestaltung mit einem konischen Grundkörper besteht darin, dass auch unter erhöhten Belastungen die Durchführung zum Beispiel einer Druckbelastung, ein Herausdrücken der Durchführung mit Metallstift aus der Durchgangsöffnung sicher vermieden wird. Besonders bevorzugt ist es, wenn die Öffnungen durch eine einfache Herstellmethode, beispielsweise durch Stanzen, in das Gehäuseteil eingebracht werden.

In den Figuren 6a-7b sind komplette Batteriezellen dargestellt, mit eingesetzten Durchführungen.

Hierbei zeigen die Figuren 6a-6b eine Ausgestaltung der Erfindung, bei der das Durchführungsbauteil nicht mit einem Kopfteil versehen ist und im Gegensatz hierzu die Figuren 7a-7b eine Batterie bzw. Batteriezelle mit einem Gehäuse und darin eingebauten Durchführungen, wobei das Durchführungsbauteil ein Kopfteil gemäß der Erfindung aufweist.

In Figur 6a ist der prinzipielle Aufbau einer Batteriezelle 1000 dargestellt.

Die Batteriezelle 1000 weist ein Gehäuse 1100 mit Seitenwänden 1110 und einem Deckelteil 1120 auf. In das Deckelteil 1120 des Gehäuses 1100 sind Öffnungen 1130.1, 1130.2 eingelassen beispielsweise durch Stanzen. In die beiden Öffnungen 1130.1, 1130.2 sind wiederum Durchführungen 1140, 1140.2 eingesetzt.

Detailliert zeigt Figur 6b den Ausschnitt des Batteriedeckels 1120 mit der Öffnung 1130.1 und darin eingesetzter Durchführung 1140.1.

Die Durchführung 1140.1 umfasst einen stiftförmigen Leiter 2003 sowie einen Grundkörper 2200. Der stiftförmige Leiter 2003 ohne ein Kopfteil ist in den Grundkörper 2200 mit einem Glas- oder Glaskeramikmaterial 2280 eingeglast. Der stiftförmige Leiter 2003 wird nach Einglasen in den Grundkörper 2200 mit Glas- oder Glaskeramikmaterial 2280 als gesamtes Bauteil in die Öffnung 1130.1 eingesetzt, beispielsweise in dem der Grundkörper 2200 der Durchführung der bevorzugt aus Aluminium besteht, mit dem aus Aluminium bestehenden kaltverfestigten Deckelteil 1120, z. B. durch Schweißen verbunden wird. Aufgrund der Einglasung ist der Grundkörper 2200 bevorzugt erweicht.

Am stiftförmigen Leiter ist eine Ausnehmung 2002 vorgesehen, in die ein Elektrodenverbindungsteil 2020 eingesetzt ist. Das Elektrodenverbindungsteil wiederum dient entweder als Kathode oder als Anode der elektrochemischen Zelle 2004 der Batterie 1000. Die elektrochemische Zelle der Lithium-Ionen-Batterie wird auch als Batteriezelle 2004 bezeichnet. Das Gehäuse 1100, das die Batteriezelle 2004 umgibt, wird als Batteriezellengehäuse bezeichnet.

Wie aus Fig. 6a hervorgeht, ist aufgrund der Bauweise der Durchführung 1140.1, 1140.2 mit einem stiftförmigen Leiter und einem in einer Ausnehmung 2002 des stiftförmigen Leiters eingesetztes Elektrodenverbindungsbauteil, das mit der Batteriezelle 2004 verbunden wird, ein großer Bauraum 2006, der zwischen der Batteriezelle 2004 und dem Deckel 1120 gebildet wird, verbunden.

Durch die erfindungsgemäße flache Bauweise des Durchführungsbauteils 3200 wie in den Fig. 7a und 7b gezeigt, gelingt am nicht ausgenutzten Bauraumes in dem Batteriezellengehäuse zu minimieren. Dies ist deutlich in den Fig. 7a-7b zu entnehmen.

Gleiche Bauteile wie in Fig. 6a und 6b mit um 2000 erhöhten Bezugsziffern gekennzeichnet.

Wiederum sind in die Öffnung 3130.1, 3130.2 des Deckels 3120 des Batteriezellengehäuses 3100 Durchführungen 3140.1, 3140.2 eingesetzt. Im Gegensatz zum Durchführungsbauteil der Durchführungen gemäß Fig. 6a und 6b ist nunmehr das Durchführungsbauteil mit einem stiftförmigen Leiter 3003 sowie einem Kopfteil 3005 versehen. Das Kopfteil weist einen Fortsatz 3030 auf sowie ein auf dem Kopfteil 3005 durch eine Schweiß-, Löt-, oder sonstiges der zuvor beschriebenen Verfahren fest angebrachtes Elektrodenverbindungsbauteil 3010. Das Elektrodenverbindungsteil weist einen Abschnitt 3140 auf, wobei der Abschnitt 3140 als Kathode beziehungsweise Anode für die elektrochemische Zelle, hier die Batteriezelle dient. Wie aus den Fig. 7a-7b hervorgeht, ist deutlich der Vorteil des erfindungsgemäßen Durchführungsbauteils zu erkennen, dass die in Fig. 7a-7b gezeigte Bauart der Durchführung bedingt, dass möglichst wenig Bauraum innerhalb des Batteriezellengehäuses, ungenutzt bleibt.

Im Wesentlichen stimmt die Ausgestaltung der Durchführungen mit Fig. 7a und 7b mit der Ausgestaltung der Durchführung in Fig. 2 und Fig. 5a-5b überein. Die Beschreibung zu Fig. 2 wird vollumfänglich auf die vorliegende Beschreibung der Batteriezelle übertragen.

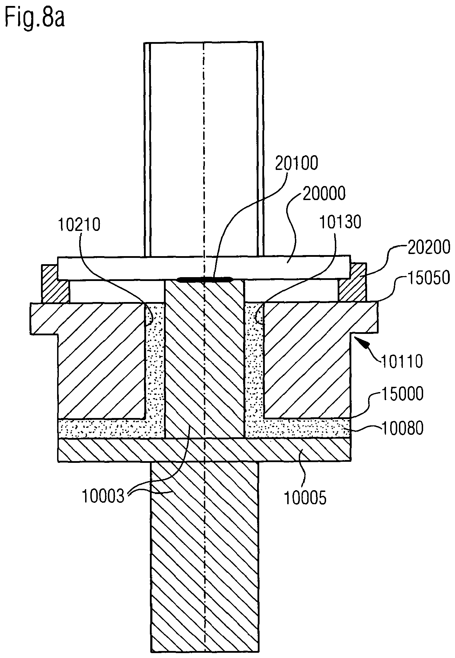

In einer alternativen Ausführungsform einer Durchführung, die in den Fig. 8a-8d gezeigt ist, wird ein stiftförmiger Leiter 10003 mit einem Kopfteil 10005 in eine Öffnung 10130 eines Gehäuses 10110, insbesondere eines Batteriezellengehäuses, eingeglast und zwar derart, dass das Kopfteil 10005 des stiftförmigen Leiters 10003 mit der Außenseite 10110 des Batteriegehäuses verbunden wird. Unter Außenseite 15000 des Batteriegehäuses 10110 wird vorliegend die Seite des Batteriegehäuses verstanden, die nicht in das Innere der Batteriezelle gerichtet ist, sondern nach außen. Die Anordnung des Kopfteiles 10005 an der Außenseite 15000 dient der Verstärkung und Festigkeitssteigerung, insbesondere bei dünnwandigen Batteriegehäusen. Der im Wesentlichen stiftförmige Leiter wird in ein Glas- bzw. Glaskeramikmaterial 10080 eingeglast. In der dargestellten Ausführungsform ist das Glas- bzw. Glaskeramikmaterial 10080 nicht nur zwischen dem im Wesentlichen stiftförmigen Leiter 10003 und der Innenwand 10210 der Öffnung 10130 eingebracht, sondern auch zwischen der dem Kopfteil 10005 und der Außenseite 15000 des Batteriegehäuses. An der Innenseite 15050 des Batteriegehäuses wird in einem weiteren Verfahrensschritt nach der Einglasung ein Aufsatzbauteil 20000 mit dem im Wesentlichen stiftförmigen Leiter 10003 an seiner Innenseite 20100 verbunden. Zur Stabilisierung kann zwischen dem Aufsatzbauteil 20000 und der Innenseite 15050 des Batteriegehäuses 10110 eine Stützscheibe 20200 zur Stabilisierung vorgesehen sein. Das Aufsatzbauteil 20000 kann mit dem nach innen ragenden, im Wesentlichen stiftförmigen Leiter 10003 an der Innenseite 20100 beispielsweise verschweißt oder verlötet sein. Das Aufsatzbauteil 20000 dient der Verbindung mit den Elektroden (nicht gezeigt) der Batteriezelle, es kann aber auch zur Kontaktierung der Batteriezellen untereinander dienen. Insoweit handelt es sich beim Aufsatzbauteil 20000 um ein Elektroden-Verbindungsbauteil im Sinne der Erfindung. Bei der Ausgestaltung gemäß Fig. 8a wurde die Dicke des Batteriegehäuses im Bereich der Öffnung bzw. Durchgangsöffnung 10130 durch einen Umformprozess erhöht und damit die Einglasungslänge.

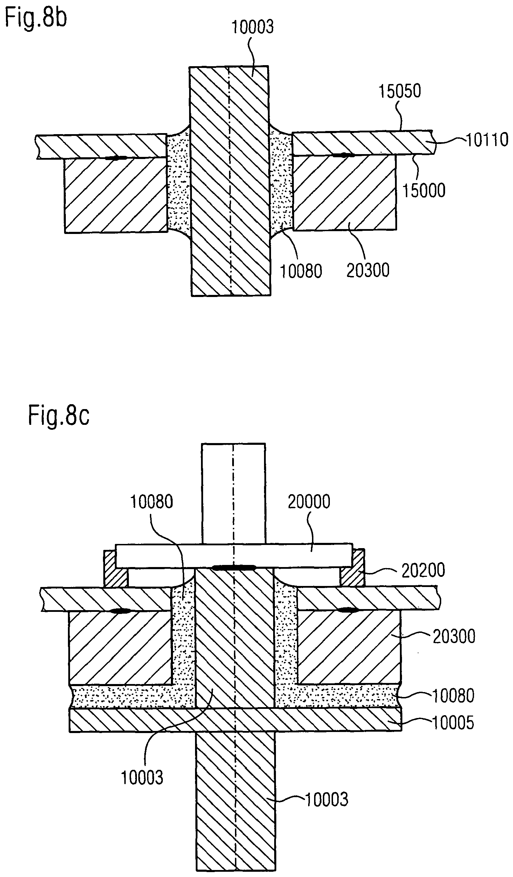

Eine weitere Möglichkeit, das Batteriegehäuse 10110 zu verstärken, besteht darin, einen Außenring 20300 vorzusehen, der mit der Außenseite 15000 des Batteriegehäuses 10110 verbunden wird, beispielsweise durch Verschweißen. Auch hierdurch kann eine längere Einglasungslänge zur Verfügung gestellt werden. Nach Anbringen des Außenringes 20300, wie in den Figuren 8b und 8c gezeigt, an der Außenseite 15000 des Batteriegehäuses bzw. Batteriedeckels wird dann der im Wesentlichen stiftförmige Leiter 10003 eingeglast. Ein solches Vorgehen hat gegenüber dem Vorgehen nach Fig. 8a den Vorteil, dass beim Einschweißen, d.h. Verglasen des im Wesentlichen stiftförmigen Leiters in das Batteriegehäuse Undichtigkeiten vermieden werden. Gleiche Bauteile in den Fig. 8b bis 8c wie in Fig. 8a sind mit denselben Bezugsziffern bezeichnet. Bei der Ausgestaltung mit Außenring 20300 gemäß Fig. 8b wird ein einfacher stiftförmiger Leiter ohne Kopfteil verwandt. Fig. 8c zeigt analog Fig. 8a eine Ausführungsform mit Kopfteil 10005. Das Kopfteil 10005 des Stiftes 10003 dient der Verstärkung und Festigkeitssteigerung. Wie in Fig. 8a weist die Durchführung gemäß Figur 8c ein Aufsatzbauteil 20000 sowie ein Stützteil 20100 auf. Die Einglasung 10080 erfolgt in die Öffnung 10130 des Batteriegehäuses und zwischen Kopfteil 10005 und Außenring 20300. Vorteil gegenüber der Ausgestaltung in Fig. 8a ist, dass beim Einschweißen des stiftförmigen Leiters in das Batteriegehäuse Undichtigkeiten vermieden werden. Ein weiterer Vorteil besteht darin, dass der Außenring 20300 ein anderes Material sein kann als das Batteriegehäuse. Da das Gehäuse im Bereich der Öffnung nicht umgeformt werden muss, wird die Fertigung vereinfacht. Nachteil des Umformens ist, dass Material an der umzuformenden Stelle benötigt wird oder im Bereich der Durchöffnung wird die Struktur lokal im Bereich der Innenwand 10210 und dem Übergang geschwächt, was zur Rissbildung führen kann. Der Außenring 2030 wird hingegen separat aufgebracht, was dazu führt, dass das zu formende Loch einfacher herzustellen ist. Die Struktur in der Durchführung wird wegen Vermeidung des umgeformten Materials stabiler. Außerdem kann, wie oben beschrieben, der Außenring aus einem anderen Material gefertigt werden. Hierdurch kann eine bessere Anglasung gewährleistet werden. Zudem kann der Außenring eine höhere spezifische Wärmekapazität als das umliegende Gehäuse aufweist, so dass Temperaturspitzen beim Betrieb besser abgefangen und die Glasdurchführung entlastet wird.

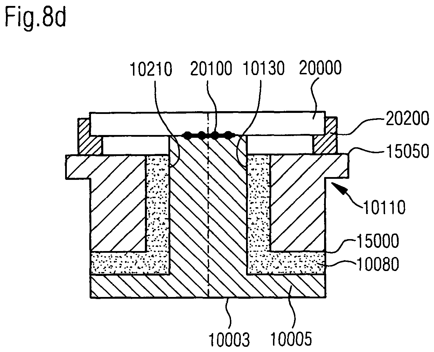

In Figur 8d ist eine abgewandelte Ausführungsform zu Figur 8a gezeigt. Wie in Figur 8a ist in Figur 8d das Gehäuse im Bereich der Durchgangsöffnung 10130 einteilig und die Länge der Einglasung durch Umformen verlängert. Gleiche Bauteile wie in Figur 8a sind mit denselben Bezugsziffern gekennzeichnet. Im Gegensatz zu Figur 8a ist aber kein über das Kopfteil 10005 hinausgehender stiftförmiger Leiter vorgesehen. Auch fehlt der über das Aufsatzbauteil 20000 hinausgehende stiftförmige Leiter.

Mit der Ausgestaltung der stiftförmigen Leiter mit einem Kopfteil und den damit verbundenen Elektroden-Verbindungsbauteile wird eine sehr hohe Stabilität, insbesondere auch gegen mechanische Belastung wie Vibrationen erreicht.

Mit der vorliegenden Erfindung wird erstmals eine Durchführung für ein Gehäuse, insbesondere ein Batteriezellengehäuse, bevorzugt für eine Lithium-Ionen-Batterie, angegeben, die vorfertigbar ist und besonders dafür geeignet ist, in Gehäuseteile von Batteriezellengehäusen, bestehend aus einem Leichtmetall, insbesondere Aluminium (AI) oder eine Aluminiumlegierung, eingesetzt zu werden. Es sind aber als Materialien für das Batteriezellengehäuse auch Stahl oder Edelstahl, insbesondere Nirosta-Edelstahl möglich. In einem solchen Fall werden die Materialien des stiftförmigen Leiters mit Kopfteil und gegebenenfalls des Grundkörpers entsprechend ausgewählt und angepasst.

Die erfindungsgemäße Lösung ermöglicht es des Weiteren, auf ein kostengünstiges Herstellungsverfahren und Ausgangsmaterialien zurückzugreifen. Ferner kann die gesamte Durchführung als vorgefertigtes Bauteil ausgebildet sein, in welches der Metallstift mittels eines Fixiermaterials, d.h. beispielsweise eines Glaspfropfens, in einen Grundkörper eingeschmolzen wird, bevor dieser in das Gehäuseteil eingesetzt wird hierdurch sichergestellt, dass es zu keinem Verlust der Kaltverfestigung des Gehäusebauteiles kommt. Des Weiteren können Materialstärken und Materialien von Gehäusebauteil und Grundkörper unabhängig gewählt werden. Durch spezielle Ausgestaltungen mit einer Entlastungseinrichtung kann die Durchführung sowohl mechanisch wie thermisch entlastet werden.

Mit dem Durchführungsbauteil gemäß der Erfindung kann ein Batteriegehäuse zur Verfügung gestellt werden, das hermetisch dicht ist auch bei einer Verformung des Batteriegehäuses im Gegensatz zu Kunststoffdurchführungen, die zur Rissbildung neigen. Hierdurch wird bei Batterien mit Batteriegehäusen, die eine erfindungsgemäße Durchführung aufweisen, insbesondere eine hohe Feuerbeständigkeit bei Fahrzeugunfällen zur Verfügung gestellt. Dies ist insbesondere bei einem Einsatz von Batterien, bevorzugt Li-Ionen-Batterien im Automobilbereich von Bedeutung.

## Patentansprüche

1. Durchführung zum Durchführen eines Leiters eines Durchführungsbauteils (1, 101, 201, 301, 401), durch ein Gehäuseteil eines Gehäuses, insbesondere eines Batteriegehäuses,
**dadurch gekennzeichnet, dass**
die Durchführung umfasst:
ein Glas- oder Glaskeramikmaterial (280, 380),
ein Durchführungsbauteil mit wenigstens einem Leiter, insbesondere einem im Wesentlichen stiftförmigen Leiter (3, 103, 203, 303, 403, 10003) und
einem Kopfteil (5, 105, 205, 305, 405, 10005), wobei das Durchführungsbauteil in das Glas- oder Glaskeramikmaterial (280, 380) eingeglast ist und
die Fläche (F_{KOPFTEIL}) des Kopfteils (5, 105, 205, 305, 405, 10005) größer ist als die Fläche, insbesondere die Querschnittsfläche (F_{LEITER}) des Leiters, insbesondere des im Wesentlichen stiftförmigen Leiters (3, 103, 203, 303, 403, 10003) und das Kopfteil derart ausgestaltet ist, dass es mit einem
Elektroden-Verbindungsbauteil beziehungsweise Elektroden-Verbindungsteil (10, 110, 20000), insbesondere aus Kupfer, einer Kupferlegierung CuSiC, einer Aluminiumlegierung AlSiC oder Aluminium, verbindbar ist, mit einer mechanisch stabilen und nicht lösbaren und elektrisch gut leitenden Verbindung,
wobei der Leiter eine Aluminiumlegierung, Aluminium, eine Kupferlegierung, Kupfer, eine Silberlegierung, Silber, eine Goldlegierung, Gold, Magnesium oder eine Magnesiumlegierung umfasst.

2. Durchführung nach Anspruch 1,
**dadurch gekennzeichnet, dass**
das Kopfteil (5, 105, 205, 305, 405, 10005) ein Zentrierteil, insbesondere in Form eines über das Kopfteil hinausragenden Fortsatzes (30,130 230, 330, 430) des im Wesentlichen stiftförmigen Leiters (3, 103, 203, 303, 403, 10003) umfasst, wobei der Fortsatz rund oder nicht rund ausgeführt sein kann, ergebend eine Zentriermöglichkeit oder nicht rund ergebend eine Verdrehsicherung.

3. Durchführung nach einem der Ansprüche 1 bis 2,
**dadurch gekennzeichnet, dass**
das Elektroden-Verbindungsbauteil (10, 110, 20000) mit dem Kopfteil (5, 105, 205, 305, 405) durch Schweißen, Löten, Verpressen, Verstemmen, Krimpen, Schrumpfen, Klemmen oder Quetschen verbunden ist.

4. Durchführung nach einem der Ansprüche 1 bis 3,
**dadurch gekennzeichnet, dass**
das Elektroden-Verbindungsbauteil (10, 110, 20000) eine Zentrieröffnung zur Aufnahme für den Fortsatz des Kopfteiles (5, 105, 205, 305, 405, 10005) aufweist.

5. Durchführung nach einem der Ansprüche 3 bis 4,
**dadurch gekennzeichnet, dass**
das Elektroden-Verbindungsbauteil (10,110, 20000) ein flaches Bauteil ist, bei dem die Dicke des Bauteiles klein gegen die Abmessungen des Bauteiles im Wesentlichen senkrecht zur Dicke ist.

6. Durchführung nach einem der Ansprüche 3 bis 5,
**dadurch gekennzeichnet, dass**
das Elektroden-Verbindungsteil (10, 110, 20000) Versteifungen (12), insbesondere in Form von Versteifungsprägungen umfasst.

7. Durchführung nach einem der Ansprüche 3 bis 6,
**dadurch gekennzeichnet, dass**
das Elektroden-Verbindungsbauteil (10, 110) eine Beschichtung, umfassend insbesondere eines oder mehrere der nachfolgenden Materialien, umfasst:
Cu, Al, Ni, Au, Pd, Zn, Ag.

8. Durchführung nach einem der Ansprüche 1 bis 7,
**dadurch gekennzeichnet, dass**
das Kopfteil (405) eine Auskragung umfasst.

9. Durchführung nach einem der Ansprüche 1 bis 8,
**dadurch gekennzeichnet, dass**
das Gehäuseteil gebildet ist aus Leichtmetall, insbesondere Aluminium, einer Aluminiumlegierung, AlSiC, Magnesium, einer Magnesiumlegierung, Titan oder einer Titanlegierung.

10. Durchführung nach einem der Ansprüche 1 bis 9,
**dadurch gekennzeichnet, dass**
die Durchführung einen Grundkörper aufweist, in den wenigstens der stiftförmige Leiter des Durchführungsbauteiles in einem Glas- oder Glaskeramikmaterial eingeglast ist.

11. Durchführung nach Anspruch 10,
**dadurch gekennzeichnet, dass**
der Grundkörper gebildet ist aus Leichtmetall oder Stahl.

12. Durchführung nach einem der Ansprüche 1 bis 11,
**dadurch gekennzeichnet, dass**
das Glas- oder Glaskeramikmaterial nachfolgende Komponenten in mol-% umfasst:
| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-19 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 0-10 mol-%, insbesondere 1-5 mol-%, ganz bevorzugt 2-5mol-%. |

13. Durchführung nach Anspruch 12,
**dadurch gekennzeichnet, dass**
das Glas- oder Glaskeramikmaterial die nachfolgenden Komponenten umfasst:
| | |
|---|---|
| P₂O₅ | 38-50 mol-%, insbesondere 39-48 mol-% |
| Al₂O₃ | 3-14 mol-%, insbesondere 4-12 mol-% |
| B₂O₃ | 4-10 mol-%, insbesondere 4-8 mol-% |
| Na₂O | 10-30 mol-%, insbesondere 14-20 mol-% |
| K₂O | 10-20 mol-%, insbesondere 12-19 mol-% |
| PbO | 0-10 mol-%., insbesondere 0-9 mol-% |

14. Gehäuse, insbesondere Batteriezellengehäuse, umfassend wenigstens eine Durchführung nach einem der Ansprüche 1 bis 13 sowie wenigstens ein mit einem Durchführungsbauteil verbundenes Elektroden-Verbindungsbauteil (10, 110).

15. Gehäuse nach Anspruch 14,
**dadurch gekennzeichnet, dass**
das Gehäuse ein Leichtmetall, bevorzugt Aluminium, eine Aluminiumlegierung, Magnesium, eine Magnesiumlegierung, Titan oder eine Titanlegierung oder ein Metall, bevorzugt Stahl, Edelstahl, nicht rostenden Stahl, Werkzeugstahl umfasst.

16. Gehäuse, insbesondere Batteriezellengehäuse nach einem der Ansprüche 14 bis 15, **dadurch gekennzeichnet, dass** das Elektroden-Verbindungsbauteil ein Aufsatzbauteil (20000) ist.

17. Gehäuse, insbesondere Batteriezellengehäuse nach einem der Ansprüche 14 bis 16, **dadurch gekennzeichnet, dass** das Batteriezellengehäuse einen Außenring (20300) umfasst.

18. Speichereinrichtung, insbesondere Batterie, bevorzugt Li-Ionen-Batterie, insbesondere Li-Ionen-Akkumulator, bevorzugt mit einem Gehäuse, insbesondere einem Batteriegehäuse, insbesondere nach einem der Ansprüche 14 bis 17,
**dadurch gekennzeichnet, dass**
die Speichereinrichtung eine Durchführung nach einem der Ansprüche 1 bis 13 umfasst.

## Claims

1. Feedthrough for passing a conductor of a feedthrough component (1, 101, 201, 301, 401) through a housing part of a housing, in particular a battery housing,
**characterized in that**
the feedthrough comprises:
a glass or glass ceramic material (280, 380),
a feedthrough component having at least one conductor, in particular a substantially pin-shaped conductor (3, 103, 203, 303, 403, 10003) and a head part (5, 105, 205, 305, 405, 10005),
wherein
the feedthrough component is vitrified in the glass or glass-ceramic material (280, 380), and the area (F_{KOPFTEIL}) of the head part (5, 105, 205, 305, 405, 10005) is larger than the area, in particular the cross-sectional area (F_{LEITER}) of the conductor, in particular of the essentially pin-shaped conductor (3, 103, 203, 303, 403, 10003), and the head part is designed in such a way that it can be connected to an electrode connecting component or electrode connecting part (10, 110, 20000), in particular made of copper, a copper alloy CuSiC, an aluminum alloy AlSiC or aluminum, with a mechanically stable and non-detachable and electrically well-conducting connection,
wherein the conductor comprises an aluminum alloy, aluminum, a copper alloy, copper, a silver alloy, silver, a gold alloy, gold, magnesium or a magnesium alloy.

2. Feedthrough according to claim 1,
**characterized in that**
the head part (5, 105, 205, 305, 405, 10005) comprises a centering part, in particular in the form of an extension (30, 130 230, 330, 430), projecting beyond the head part, of the substantially pin-shaped conductor (3, 103, 203, 303, 403, 10003), wherein the extension may be of round or non-round design, resulting in a centering possibility or non-round resulting in an anti-rotation device.

3. Feedthrough according to one of claims 1 to 2,
**characterized in that**
the electrode connecting component (10, 110, 20000) is connected to the head part (5, 105, 205, 305, 405) by welding, soldering, pressing, caulking, crimping, shrinking, clamping or squeezing.

4. Feedthrough according to one of claims 1 to 3,
**characterized in that**
the electrode connecting component (10, 110, 20000) has a centering opening for accommodating the extension of the head part (5, 105, 205, 305, 405, 10005).

5. Feedthrough according to one of claims 3 to 4,
**characterized in that**
the electrode connecting component (10,110, 20000) is a flat component in which the thickness of the component is small against the dimensions of the component substantially perpendicular to the thickness.

6. Feedthrough according to one of claims 3 to 5,
**characterized in that**
the electrode connecting part (10, 110, 20000) comprises stiffeners (12), in particular in the form of stiffener embossments.

7. Feedthrough according to one of claims 3 to 6,
**characterized in that**
the electrode connecting component (10, 110) comprises a coating, comprising in particular one or more of the following materials:
Cu, Al, Ni, Au, Pd, Zn, Ag.

8. Feedthrough according to one of claims 1 to 7,
**characterized in that**
the head part (405) comprises a projection.

9. Feedthrough according to one of claims 1 to 8,
**characterized in that**
the housing part is formed from light metal, in particular aluminum, an aluminum alloy, AlSiC, magnesium, a magnesium alloy, titanium or a titanium alloy.

10. Feedthrough according to one of claims 1 to 9,
**characterized in that**
the feedthrough comprises a base body into which at least the pin-shaped conductor of the feedthrough component is vitrified in a glass or glass-ceramic material.

11. Feedthrough according to claim 10,
**characterized in that**
the base body is formed of light metal or steel.

12. Feedthrough according to one of claims 1 to 11,
**characterized in that**
the glass or glass-ceramic material comprises the following components in mol-%:
| | |
|---|---|
| P₂O₅ | 35-50 mol-%, in particular 39-48 mol-% |
| Al₂O₃ | 0-14 mol-%, in particular 2-12 mol-% |
| B₂O₃ | 2-10 mol-%, in particular 4-8 mol-% |
| Na₂O | 0-30 mol-%, in particular 0-20 mol-% |
| M₂O | 0-20 mol-%, in particular 12-19 mol-%, wherein M=K, Cs, Rb is possible |
| PbO | 0-10 mol-%, in particular 0-9 mol-% |
| Li₂O | 0-45 mol-%, in particular 0-40 mol-%, very preferably 17-40 mol-% |
| BaO | 0-20 mol-%, in particular 0-20 mol-%, very preferably 5-20 mol-% |
| Bi₂O₃ | 0-10 mol-%, in particular 1-5 mol-%, very preferably 2-5mol-%. |

13. Feedthrough according to claim 12,
**characterized in that**
the glass or glass-ceramic material comprises the following components:
| | |
|---|---|
| P₂O₅ | 38-50 mol-%, in particular 39-48 mol-% |
| Al₂O₃ | 3-14 mol-%, in particular 4-12 mol-% |
| B₂O₃ | 4-10 mol-%, in particular 4-8 mol-% |
| Na₂O | 10-30 mol-%, in particular 14-20 mol-% |
| K₂O | 10-20 mol-%, in particular 12-19 mol-% |
| PbO | 0-10 mol-%, in particular 0-9 mol-%. |

14. Housing, in particular battery cell housing, comprising at least one feedthrough according to one of claims 1 to 13 and at least one electrode connecting component (10, 110) connected to a feedthrough component.

15. Housing according to claim 14,
**characterized in that**
the housing comprises a light metal, preferably aluminum, an aluminum alloy, magnesium, a magnesium alloy, titanium or a titanium alloy, or a metal, preferably steel, high-grade steel, stainless steel, tool steel.

16. Housing, in particular battery cell housing according to one of claims 14 to 15,
**characterized in that**
the electrode connecting component is a top-mounted component (20000).

17. Housing, in particular a battery cell housing according to one of claims 14 to 16,
**characterized in that**
the battery cell housing comprises an outer ring (20300).

18. Storage device, in particular battery, preferably Li-ion battery, in particular Li-ion accumulator, preferably having a housing, in particular a battery housing, in particular according to one of claims 14 to 17,
**characterized in that**
the storage device comprises a feedthrough according to one of claims 1 to 13.

## Revendications

1. Traversée pour le passage d'un conducteur d'un composant de traversée (1, 101, 201, 301, 401), à travers une partie de boîtier d'un boîtier, en particulier d'un boîtier de batterie, **caractérisée en ce qu'**elle comprend :
un matériau à base de verre ou de vitrocéramique (280, 380), une partie de traversée avec au moins un conducteur, en particulier un c onducteur sensiblement en forme de broche (3, 103, 203, 303, 403, 10003), et une partie de tête (5, 105, 205, 305, 405, 10005), la partie de traversée étant vitrifiée dans le matériau à base de verre ou de vitrocéramique (280, 380) et la surface (F_{TÊTE}) de la partie de tête (5, 105, 205, 305, 405, 10005) étant plus grande que la surface, en particulier que l'aire de section (F_{CONDUCTEUR}) du conducteur, en particulier du conducteur sensiblement en forme de broche (3, 103, 203, 303, 403, 10003) et la partie de tête étant conformée de telle façon qu'elle peut être raccordée à un composant de raccordement d'électrode ou à une pièce de raccordement d'électrode (10, 110, 20000), en particulier en cuivre, en alliage de cuivre CuSiC, en alliage d'aluminium AlSiC ou en aluminium, avec un raccordement mécaniquement stable et ne pouvant pas être défait et électriquement bon conducteur, le conducteur comprenant un alliage d'aluminium, de l'aluminium, un alliage de cuivre, du cuivre, un alliage d'argent, de l'argent, un alliage d'or, de l'or, du magnésium ou un alliage de magnésium.

2. Traversée selon la revendication 1,
**caractérisée en ce que**
la partie de tête (5, 105, 205, 305, 405, 10005) comprend une partie de centrage, en particulier formée par une saillie (30, 130, 230, 330, 430) du conducteur sensiblement en forme de broche (3, 103, 203, 303, 403, 10003) qui dépasse au-delà de la partie de tête, laquelle saillie peut être ronde ou non ronde et créer une possibilité de centrage ou non ronde et créer une sécurité contre la rotation.

3. Traversée selon l'une des revendications 1 à 2,
**caractérisée en ce que** le
composant de raccordement d'électrode (10, 110, 20000) est raccordé à la partie de tête (5, 105, 205, 305, 405) par soudage, brasage, pressage, calage, sertissage, rétraction, serrage ou écrasement.

4. Traversée selon l'une des revendications 1 à 3,
**caractérisée en ce que**
le composant de raccordement d'électrode (10, 110, 20000) comporte une ouverture de centrage pour recevoir la saillie de la partie de tête (5, 105, 205, 305, 405, 10005).

5. Traversée selon l'une des revendications 3 à 4,
**caractérisée en ce que**
le composant de raccordement d'électrode (10, 110, 20000) est un composant plat, dans lequel l'épaisseur du composant est petite par rapport aux dimensions du composant sensiblement perpendiculaires à l'épaisseur.

6. Traversée selon l'une des revendications 3 à 5,
**caractérisée en ce que**
la pièce de raccordement d'électrode (10, 110, 20000) présente des raidisseurs (12), en particulier formés par des gaufrages raidisseurs.

7. Traversée selon l'une des revendications 3 à 6,
**caractérisée en ce que**
le composant de raccordement d'électrode (10, 110) comprend un revêtement, comprenant en particulier un ou plusieurs des matériaux suivants : Cu, Al, Ni, Au, Pd, Zn, Ag.

8. Traversée selon l'une des revendications 1 à 7,
**caractérisée en ce que**
la partie de tête (405) comporte une saillie.

9. Traversée selon l'une des revendications 1 à 8,
**caractérisée en ce que**
la partie de boîtier est faite de métal léger, en particulier d'aluminium, d'un alliage d'aluminium, d'AISiC, de magnésium, d'un alliage de magnésium, de titane ou d'un alliage de titane.

10. Traversée selon l'une des revendications 1 à 9,
**caractérisée en ce que**
la traversée présente un corps de base dans lequel au moins le conducteur en forme de broche de la partie de traversée est vitrifié dans un matériau à base de verre ou de vitrocéramique.

11. Traversée selon la revendication 10,
**caractérisée en ce que**
le corps de base est fait de métal léger ou d'acier.

12. Traversée selon l'une des revendications 1 à 11,
**caractérisée en ce que**
le matériau à base de verre ou de vitrocéramique contient les composants suivants, en % molaires :
| | |
|---|---|
| P₂O₅ | 35 à 50 % molaires, en particulier 39 à 48 % molaires |
| Al₂O₃ | 0 à 14 % molaires, en particulier 2 à 12 % molaires |
| B₂O₃ | 2 à 10 % molaires, en particulier 4 à 8 % molaires |
| Na₂O | 0 à 30 % molaires, en particulier 0 à 20 % molaires |
| M₂O | 0 à 20 % molaires, en particulier 12 à 19 % molaires, où M peut être K, Cs, Rb |
| PbO | 0 à 10 % molaires, en particulier 0 à 9 % molaires |
| Li₂O | 0 à 45 % molaires, en particulier 0 à 40 % molaires, de préférence 17 à 40 % molaires |
| BaO | 0 à 20 % molaires, en particulier 0 à 20 % molaires, de préférence 5 à 20 % molaires |
| Bi₂O₃ | 0 à 10 % molaires, en particulier 1 à 5 % molaires, de |
| préférence 2 à 5% molaires | |

13. Traversée selon la revendication 12,
**caractérisée en ce que**
le matériau à base de verre ou de vitrocéramique comprend les composants suivants :
| | |
|---|---|
| P₂O₅ | 38 à 50 % molaires, en particulier 39 à 48 % molaires |
| Al₂O₃ | 3 à 14 % molaires, en particulier 4 à 12 % molaires |
| B₂O₃ | 4 à 10 % molaires, en particulier 4 à 8 % molaires |
| Na₂O | 10 à 30 % molaires, en particulier 14 à 20 % molaires |
| K₂O | 10 à 20 % molaires, en particulier 12 à 19 % molaires |
| PbO | 0 à 10 % molaires, en particulier 0 à 9 % molaires. |

14. Boîtier, en particulier boîtier pour cellules de batterie, comprenant au moins une traversée selon l'une des revendications 1 à 13 ainsi qu'au moins un composant de raccordement d'électrode (10, 110) raccordé à un composant de traversée.

15. Boîtier selon la revendication 14,
**caractérisé en ce que**
le boîtier comprend un métal léger, de préférence de l'aluminium, un alliage d'aluminium, du magnésium, un alliage de magnésium, du titane ou un alliage de titane ou un métal, de préférence de l'acier, de l'acier fin, de l'acier inoxydable, de l'acier à outils.

16. Boîtier, en particulier boîtier pour cellules de batterie, selon l'une des revendications 14 à 15,
**caractérisé en ce que**
le composant de raccordement d'électrode est un composant rapporté (20000).

17. Boîtier, en particulier boîtier pour cellules de batterie, selon l'une des revendications 14 à 16,
**caractérisé en ce que**
le boîtier pour cellules de batterie comprend un anneau extérieur (20300).

18. Installation d'accumulation, en particulier batterie, de préférence batterie à ions lithium, en particulier accumulateur à ions lithium, de préférence avec un boîtier, en particulier un boîtier de batterie, en particulier selon l'une des revendications 14 à 17,
**caractérisée en ce qu'**elle
comprend une traversée selon l'une des revendications 1 à 13.
